(19) **Europäisches Patentamt / European Patent Office / Office européen des brevets**

(11) **EP 4 618 678 A1**

(12) **EUROPEAN PATENT APPLICATION**
published in accordance with Art. 153(4) EPC

(43) Date of publication:
**17.09.2025 Bulletin 2025/38**

(21) Application number: **23914575.8**

(22) Date of filing: **28.12.2023**

(51) International Patent Classification (IPC):
**H04W 72/30** (2023.01)

(52) Cooperative Patent Classification (CPC):
**H04W 72/0446; H04W 72/0453; H04W 72/25;
H04W 72/30; H04W 72/40**

(86) International application number:
**PCT/CN2023/142838**

(87) International publication number:
**WO 2024/146443 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.01.2023 CN 202310014096**

(71) Applicant: **ZTE Corporation
Shenzhen, Guangdong 518057 (CN)**

(72) Inventors:
• **CHEN, Jie
Shenzhen, Guangdong 518057 (CN)**

• **LU, Youxiong
Shenzhen, Guangdong 518057 (CN)**
• **MIAO, Ting
Shenzhen, Guangdong 518057 (CN)**
• **BI, Feng
Shenzhen, Guangdong 518057 (CN)**
• **XING, Weimin
Shenzhen, Guangdong 518057 (CN)**
• **HE, Haigang
Shenzhen, Guangdong 518057 (CN)**

(74) Representative: **Aipex B.V.
Vestdijk 51
5611 CA Eindhoven (NL)**

(54) **RESOURCE DETERMINATION METHODS, FIRST COMMUNICATION NODE, SECOND COMMUNICATION NODE AND STORAGE MEDIUM**

(57) Provided are a resource determination method, a first communication node, a second communication node, and a storage medium. The resource determination method includes determining a time domain resource position and a frequency domain resource position within a sidelink bandwidth part for mapping a synchronization resource, where the frequency domain resource position includes a resource block set index and an interlaced resource block index; mapping a sidelink synchronization broadcast information block based on the time domain resource position and the frequency domain resource position.

Determine a time domain resource position and a frequency domain resource position within a sidelink bandwidth part for mapping a synchronization resource, where the frequency domain resource position includes a resource block set index and an interlaced resource block index — S110

↓

Map a sidelink synchronization broadcast information block based on the time domain resource position and the frequency domain resource position — S120

**FIG. 5**

EP 4 618 678 A1

**Description**

TECHNICAL FIELD

The present disclosure relates to the field of communication technology, for example, to resource determination methods, a first communication node, a second communication node, and a storage medium.

BACKGROUND

In Release 18 (Rel-18) of the 3rd Generation Partnership Project (3GPP), research on Sidelink Unlicensed (SL-U) has been initiated, and a user equipment (UE) performs sidelink (SL) communication over an unlicensed spectrum. This includes the transmission of the sidelink synchronization signal/physical sidelink broadcast channel block (S-SS/PSBCH block, S-SSB).
However, in some regions, all signals or channels on the unlicensed spectrum need to satisfy the Occupied Channel Bandwidth (OCB) requirement. In this case, directly adopting the SL S-SSB design from Rel-16 cannot meet the OCB requirement for SL-U.

SUMMARY

The present disclosure provides resource determination methods, a first communication node, a second communication node, and a storage medium.
In a first aspect, an embodiment of the present disclosure provides a resource determination method. The method includes the following:
A time domain resource position and a frequency domain resource position within a sidelink bandwidth part for mapping a synchronization resource are determined, where the frequency domain resource position includes a resource block set index and an interlaced resource block index.
A sidelink synchronization broadcast information block is mapped based on the time domain resource position and the frequency domain resource position.
In a second aspect, an embodiment of the present disclosure provides a resource determination method. The method includes the following:
A time domain resource position and a frequency domain resource position within a sidelink bandwidth part for mapping a synchronization resource are determined, where the frequency domain resource position includes a resource block set index and an interlaced resource block index.
A sidelink synchronization broadcast information block is received based on the time domain resource position and the frequency domain resource position.
In a third aspect, an embodiment of the present disclosure provides a first communication node. The first communication node includes one or more processors and a storage apparatus configured to store one or more programs.
When executed by the one or more processors, the one or more programs cause the one or more processors to perform any of the methods provided in the embodiments of the first aspect of the present disclosure.
In a fourth aspect, an embodiment of the present disclosure provides a second communication node. The second communication node includes one or more processors and a storage apparatus configured to store one or more programs.
When executed by the one or more processors, the one or more programs cause the one or more processors to perform the method provided in the embodiments of the second aspect of the present disclosure.
In a fifth aspect, an embodiment of the present disclosure provides a storage medium. The storage medium stores a computer program that, when executed by a processor, performs any one of the methods provided in the embodiments of the present disclosure.
The preceding embodiments and other aspects of the present disclosure and implementations thereof are described in more detail in the description of drawings, detailed description, and claims.

BRIEF DESCRIPTION OF DRAWINGS

FIG. 1 is a schematic diagram of an SL S-SSB slot with a normal CP according to an embodiment of the present disclosure.
FIG. 2 is a schematic diagram of an SL S-SSB slot with an extended CP according to an embodiment of the present disclosure.
FIG. 3 is a schematic diagram illustrating the frequency domain position indication of an S-SSB according to an embodiment of the present disclosure.

FIG. 4 is a schematic diagram of a scenario of a communication system according to an embodiment of the present disclosure.

FIG. 5 is a flowchart of a resource determination method according to an embodiment of the present disclosure.

FIG. 6 is a flowchart of another resource determination method according to an embodiment of the present disclosure.

FIG. 7 is a schematic diagram of an S-SSB according to an embodiment of the present disclosure.

FIG. 8 is a schematic diagram illustrating the carrying of S-SSB resources according to an embodiment of the present disclosure.

FIG. 9 is a diagram illustrating the structure of a resource determination apparatus according to an embodiment of the present disclosure.

FIG. 10 is a diagram illustrating the structure of another resource determination apparatus according to an embodiment of the present disclosure.

FIG. 11 is a diagram illustrating the structure of a first communication node according to an embodiment of the present disclosure.

FIG. 12 is a diagram illustrating the structure of a second communication node according to an embodiment of the present disclosure.

## DETAILED DESCRIPTION

To illustrate the object, solutions, and advantages of the present disclosure more clearly, embodiments of the present disclosure are described hereinafter in detail in conjunction with drawings. It is to be noted that if not in collision, embodiments of the present disclosure and features therein may be combined with each other in any manner.

Procedures illustrated in flowcharts among the drawings may be executed by, for example, a computer system capable of executing a set of computer-executable instructions. Moreover, although logical sequences are illustrated in the flowcharts, the procedures illustrated or described may be performed in sequences different from those described herein in some cases.

The terms such as "first" and "second" in the present disclosure are used for distinguishing between similar objects and are not necessarily used for describing a particular sequence or order.

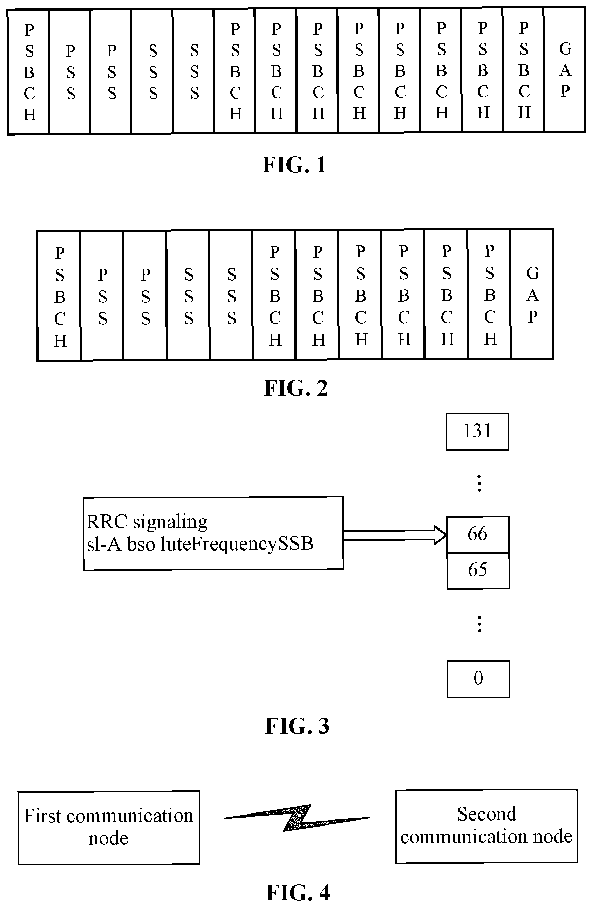

In the 3GPP Rel-16 New Radio (NR) protocol, the process of sidelink communication is standardized, including a resource determination method for an SL S-SSB and a method for mapping S-SSB symbols. For example, Rel-16 specifies that the S-SSB includes a sidelink primary synchronization signal (S-PSS), s sidelink secondary synchronization signal (S-SSS), and a physical sidelink broadcast channel (PSBCH). Moreover, the SL S-SSB slot is located outside the SL resource pool. FIG. 1 is a schematic diagram of an SL S-SSB slot with a normal CP according to an embodiment of the present disclosure, and FIG. 2 is a schematic diagram of an SL S-SSB slot with an extended CP according to an embodiment of the present disclosure. As shown in FIGS. 1 and 2, in a normal cyclic prefix (CP) configuration, an SL S-SSB independently occupies 13 symbols in one slot; in an extended CP configuration, an SL S-SSB independently occupies 11 symbols in one slot.

In the frequency domain, the S-SSB continuously occupies 11 resource blocks (RBs), equivalent to 132 resource elements (REs). The frequency domain position of the S-SSB is indicated to the UE through higher-layer signaling or a preconfigured manner.

FIG. 3 is a schematic diagram illustrating the frequency domain position indication of an S-SSB according to an embodiment of the present disclosure. As shown in FIG. 3, in an embodiment, the higher-layer signaling sl-Absolute-FrequencyS-SSB indicates to the UE the absolute radio frequency channel number (ARFCN) corresponding to the subcarrier with index 66 among the 132 subcarriers in the frequency domain of the S-SSB. Based on this indication, the UE can determine the frequency domain position of the S-SSB.

When the UE meets the conditions for transmitting the S-SSB, the UE maps the symbols of the S-SSB to the time-frequency resources of the S-SSB. The S-PSS and S-SSS, each having 127 symbols, are mapped to the middle 127 subcarriers of the 132 subcarriers of the S-SSB resources. The PSBCH is mapped across the entire 132 subcarriers of the S-SSB frequency domain. Table 1 is a schematic table of mapping rules provided by an embodiment of the present disclosure. The specific mapping rules for the resources within the S-SS/PSBCH block for the S-PSS, S-SSS, PSBCH, and dedicated demodulation reference signal (DMRS) are detailed in Table 1.

Table 1 Schematic Table of Mapping Rules Provided by an Embodiment of the Present disclosure

| Channel or Signal | OFDM Symbol Number $l$ Relative to the Start of the S-SS/PSBCH Block | Subcarrier Number $k$ Relative to the Start of the S-SS/PSBCH Block |
|---|---|---|
| S-PSS | 1, 2 | 2, 3, ..., 127, 128 |
| S-SSS | 3, 4 | 2, 3, ..., 127, 128 |

(continued)

| Channel or Signal | OFDM Symbol Number $l$ Relative to the Start of the S-SS/PSBCH Block | Subcarrier Number $k$ Relative to the Start of the S-SS/PSBCH Block |
|---|---|---|
| Set to 0 | 1, 2, 3, 4 | 0, 1, 129, 130, 131 |
| PSBCH | $0, 5, 6, \ldots, N_{\text{symb}}^{\text{S-SSB}} - 1$ | 0, 1, ..., 131 |
| DM-RS for PSBCH | $0, 5, 6, \ldots, N_{\text{symb}}^{\text{S-SSB}} - 1$ | 0, 4, 8, ..., 128 |

In some regions, all signals or channels on the unlicensed spectrum need to meet the OCB requirement, meaning the transmitted signal or channel needs to occupy 80% to 100% of a 20 MHz bandwidth. How to reuse the SL S-SSB design of Rel-16 as much as possible while meeting the OCB requirement is a challenge faced by SL-U, and the present disclosure provides some solutions to this issue.

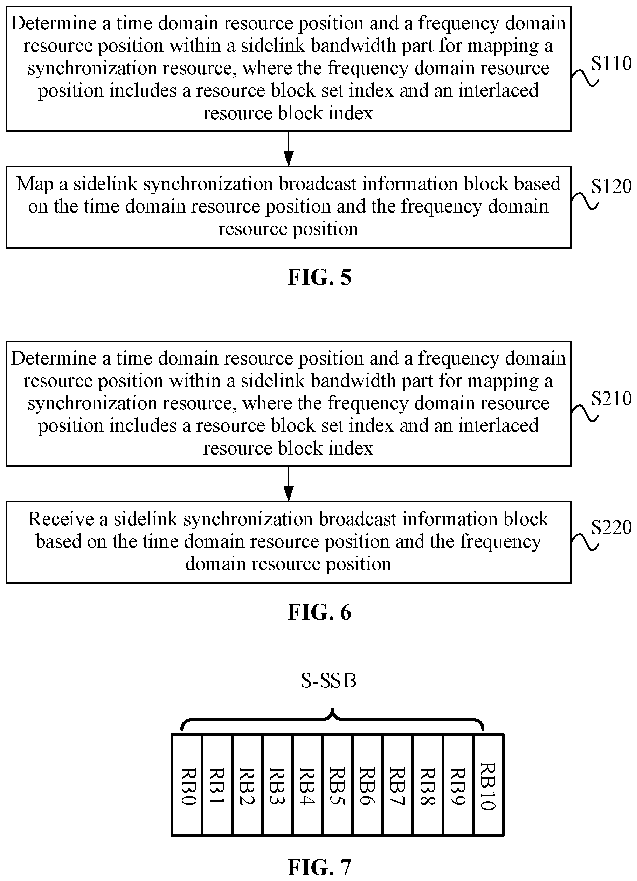

To address the above technical issue, the present disclosure provides a resource determination method. FIG. 4 is a schematic diagram of a scenario of a communication system according to an embodiment of the present disclosure. As shown in FIG. 4, a first communication node and a second communication node of the present disclosure may perform sidelink communication. In an example embodiment, FIG. 5 is a flowchart of a resource determination method according to an embodiment of the present disclosure. The method is applicable to scenarios where the OCB requirement on the unlicensed spectrum in a region is satisfied when the S-SSB is transmitted. The method may be executed by a resource determination apparatus provided by an embodiment of the present disclosure. The apparatus may be implemented by software and/or hardware and integrated into the first communication node. The first communication node may be a transmitting UE, such as a UE transmitting the S-SSB. The node communicating with the first communication node may be a second communication node. The second communication node may be a UE receiving the S-SSB.

As shown in FIG. 5, the resource determination method provided by the present disclosure includes S110 and S120.

In S110, a time domain resource position and a frequency domain resource position within a sidelink bandwidth part for mapping a synchronization resource are determined, where the frequency domain resource position includes a resource block set index and an interlaced resource block index.

When the first communication node in the present disclosure transmits the S-SSB, the first communication node may first determine the frequency domain resource position for mapping a synchronization resource block, such as the S-SSB. The frequency domain resource position may be regarded as the position of resources in the frequency domain. The manner of determination in the present disclosure is not limited. The frequency domain resource position may include two interlaced resource blocks or one interlaced resource block.

The resource block set index may be used to indicate a resource block set. The interlaced resource block index may be used to indicate an interlaced resource block.

In the present disclosure, the frequency domain resource position may include a resource block set index and an interlaced resource block index to indicate the interlaced resource blocks within a resource block set, thereby facilitating the mapping of the S-SSB.

The frequency domain resource position may be preconfigured or configured by radio resource control (RRC) signaling.

The time domain resource position includes a slot index and/or a symbol index within a slot. The slot index may be used to indicate a slot. The symbol index may indicate a time domain symbol within the slot. The symbol index within a slot may be the symbol index within the slot indicated by the slot index. The time domain resource position may be preconfigured, predefined, and/or configured by signaling.

In an embodiment, the slot index may be preconfigured, predefined, and/or configured by signaling.

In an embodiment, the symbol index within a slot may be preconfigured, predefined, and/or configured by signaling.

In an embodiment, the slot index may be determined based on information and predefined rules. The information is preconfigured, predefined, and/or configured through signaling. The predefined rules may define a reference slot. The information may be an offset value for the slot. The slot index can be determined based on the reference slot and the offset value.

In an embodiment, the frequency domain resource position may be determined by one or more of the following methods:

1. A resource block set index, a first interlaced resource block index, and a second interlaced resource block index are determined. The resource block set index, the first interlaced resource block index, and the second interlaced resource block index are preconfigured or configured through signaling.

2. A resource block set index and a first interlaced resource block index are determined. The resource block set index and the first interlaced resource block index are preconfigured or configured through signaling.

3. An absolute radio frequency channel number is determined, where the absolute radio frequency channel number is preconfigured or configured through signaling; a resource block set index and a first interlaced resource block index are determined based on resource elements within the sidelink bandwidth part where the absolute radio frequency channel number is located.

4. A resource block set index is determined, where the resource block set index is preconfigured or configured through signaling; an index of an interlaced resource block where a first physical resource block on a resource block set indicated by the resource block set index is located is determined as a first interlaced resource block index.

5. A resource block set index and an interlaced resource block index are determined. The resource block set index and the interlaced resource block index are preconfigured or configured through signaling.

6. An absolute radio frequency channel number is determined, where the absolute radio frequency channel number is preconfigured or configured through signaling; a resource block set index and an interlaced resource block index are determined based on resource elements within the sidelink bandwidth part where the absolute radio frequency channel number is located.

7. A resource block set index is determined, where the resource block set index is preconfigured or configured through signaling; an index of an interlaced resource block where a first physical resource block on a resource block set indicated by the resource block set index is located is determined as an interlaced resource block index.

The second interlaced resource block index may be determined as follows: The second interlaced resource block index is determined based on the first interlaced resource block index, an offset value, and the number of interlaced resource blocks within a resource block set; or the second interlaced resource block index is determined based on the first interlaced resource block index and a predefined rule. The predefined rule may be a predefined rule for determining the second interlaced resource block index based on the first interlaced resource block index, such as designating the next interlaced resource block adjacent to the first interlaced resource block as the second interlaced resource block, thereby determining the second interlaced resource block index of the second interlaced resource block.

In S 120, a sidelink synchronization broadcast information block is mapped based on the time domain resource position and the frequency domain resource position.

After determining the time domain resource position and the frequency domain resource position, the sidelink synchronization broadcast information block may be mapped onto the frequency domain resources indicated by the frequency domain resource position at the determined time domain resource position, so as to transmit the sidelink synchronization broadcast information block to the second communication node.

In an example, the mapping manner of the sidelink synchronization broadcast information block may be mapping the sidelink synchronization broadcast information block onto physical resource blocks of an interlaced resource block indicated by the interlaced resource block index on slot symbols within a slot corresponding to a slot index. The mapping manner specifically includes one or more of the following:

1. Each logical resource block of the sidelink synchronization broadcast information block is sequentially mapped onto the first physical resource blocks of an interlaced resource block indicated by a first interlaced resource block index and the second physical resource blocks of an interlaced resource block indicated by a second interlaced resource block index on the slot symbols within the slot corresponding to the slot index; after each logical resource block of the sidelink synchronization broadcast information block is mapped, the logical resource blocks of the sidelink synchronization broadcast information block continue to be mapped until both the first physical resource blocks and the second physical resource blocks are fully mapped, that is, mapping is performed based on physical resource blocks.

2. A first part of the sidelink synchronization broadcast information block is mapped onto the physical resource blocks of the first interlaced resource block indicated by the first interlaced resource block index on the slot symbols within the slot corresponding to the slot index; a second part of the sidelink synchronization broadcast information block is mapped onto the physical resource blocks of the second interlaced resource block indicated by the second interlaced resource block index; an overlap exists between the first part and the second part, and the first part and the second part include all logical resource blocks of the sidelink synchronization broadcast information block, that is, mapping is performed based on interlaced resource blocks.

Mapping the sidelink synchronization broadcast information block onto physical resource blocks of an interlaced resource block indicated by the interlaced resource block index on slot symbols within a slot corresponding to a slot index includes: mapping first information of the sidelink synchronization broadcast information block on physical resource blocks of an interlaced resource block indicated by the interlaced resource block index on a first time domain symbol in a slot corresponding to a slot index; and mapping second information of the sidelink synchronization broadcast information block on physical resource blocks of an interlaced resource block indicated by the interlaced resource block index on a second time domain symbol in the slot corresponding to the slot index; the slot index is included in the time domain resource position.

The first information and the second information are different information of the sidelink synchronization broadcast information block. The first information may be synchronization sequences in the S-SSB, including the PSS and SSS. The second information may be the PSBCH in the S-SSB.

In an embodiment, the synchronization sequences in the S-SSB, including the PSS and SSS, are mapped on the first time domain symbol. The PSBCH in the S-SSB is mapped on the second time domain symbol. For example, rate matching is performed on all indicated physical resources, where all the indicated physical resources include all RBs on one interlaced resource block or all RBs on two interlaced resource blocks.

In this embodiment, resource mapping of the SSB is performed on at least one interlaced resource block within one RB set in the SL bandwidth part (BWP). The internal RE index numbering in the frequency domain of the S-SSB is as described in Table 1, from RE0 to RE131. The RB indices may be denoted as RB0 to RB10, totaling 11 RBs.

The resource determination method provided by the embodiments of the present disclosure determines the time domain resource position and frequency domain resource position for mapping a synchronization resource and then maps the sidelink synchronization broadcast information block. The frequency domain resource position includes a resource block set index and an interlaced resource block index. The frequency domain resources for mapping the sidelink synchronization broadcast information block are based on interlaced resource blocks, satisfying the OCB requirement on the unlicensed spectrum in the region.

Based on the preceding embodiments, variant embodiments of the preceding embodiments are proposed. It should be noted that for brevity, only the differences from the preceding embodiments are described in the variant embodiments.

In an embodiment, at least one resource block set index is provided, and at least one interlaced resource block index is provided. For example, resource mapping of the SSB is performed on at least one interlaced resource block within at least one RB set in the SL BWP.

Multiple resource block set indices may be provided, and the method of the present disclosure may be applied to the SSB resources within each RB set. Multiple RB sets may be considered as multiple candidate SSB resources in the frequency domain.

When multiple RB set indices are provided, the UE selects one RB set for resource mapping and SSB transmission based on the Listen Before Talk (LBT) result and priority criteria.

In an embodiment, determining the frequency domain resource position within the sidelink bandwidth part for mapping the synchronization resource includes determining a resource block set index, a first interlaced resource block index, and a second interlaced resource block index, where the resource block set index, the first interlaced resource block index and the second interlaced resource block index.

Physical resource blocks on a first interlaced resource block indicated by the first interlaced resource block index and physical resource blocks on a second interlaced resource block indicated by the second interlaced resource block index are used to carry the sidelink synchronization broadcast information block, and the first interlaced resource block and the second interlaced resource block are interlaced resource blocks on a resource block set indicated by the resource block set index.

In this embodiment, two interlaced resource blocks are determined to map the SSB resources. That is, through RRC signaling configuration or preconfiguration, the RB set index, the first interlaced resource block (IRB) index, and the second IRB index are determined, where 20 RBs on the IRBs within the RB set carry the S-SSB resources.

In this embodiment, it is determined that the frequency domain resource position information may be determined based on the preconfigured or signaling-configured resource block set index, first interlaced resource block index, and second interlaced resource block index.

The first interlaced resource block index is used to indicate a first interlaced resource block in a specific resource block set, and the second interlaced resource block index is used to indicate a second interlaced resource block in the specific resource block set. The specific resource block set may be configured by signaling or preconfigured.

The physical resource blocks on the first interlaced resource block and the physical resource blocks on the second interlaced resource block are used to carry the sidelink synchronization broadcast information block.

The physical resource blocks may be regarded as resource blocks on the interlaced resource blocks.

In an embodiment, determining the frequency domain resource position within the sidelink bandwidth part for mapping the synchronization resource includes determining a preconfigured or signaling-configured resource block set index and a first interlaced resource block index; and determining a second interlaced resource block index.

In this embodiment, when the frequency domain resource position is determined, the RB set index and the first IRB index may be determined based on RRC signaling configuration or preconfiguration. The second interlaced resource block index may not be preconfigured or signaling-configured content and may be determined based on the first interlaced resource block index.

In an embodiment, determining the frequency domain resource position within the sidelink bandwidth part for mapping the synchronization resource includes determining an absolute radio frequency channel number, where the absolute radio frequency channel number is preconfigured or configured through signaling; determining a resource block set index and a first interlaced resource block index based on resource elements within the sidelink bandwidth part where the absolute radio frequency channel number is located; and determining a second interlaced resource block index.

In this embodiment, the frequency domain resource position may be determined by RRC signaling configuration; alternatively, an ARFCN is pre-configured, and then the resource block set index and the first interleaved resource block index are determined based on the resource elements corresponding to the ARFCN. The position of the ARFCN may be used to determine the resource block set and the interlaced resource block, the resource block set and the interlaced resource block correspond to the resource elements corresponding to the ARFCN.

The second interlaced resource block index is determined based on the first interlaced resource block index.

In an embodiment, determining the frequency domain resource position within the sidelink bandwidth part for mapping the synchronization resource includes determining a resource block set index, where the resource block set index is preconfigured or configured through signaling; determining an index of an interlaced resource block where a first physical resource block on a resource block set indicated by the resource block set index is located as a first interlaced resource block index; and determining a second interlaced resource block index.

In this embodiment, when the frequency domain resource position is determined, the RB set index may be configured through RRC signaling or preconfiguration, and then the first interlaced resource block index is determined according to a certain rule. For example, the index of the interlaced resource block where the first physical resource block of the RB set indicated by the RB set index is located may be determined as the first interlaced resource block index.

The method for determining the second interlaced resource index is based on the first interlaced resource block index.

In an embodiment, determining the second interlaced resource block index includes determining the second interlaced resource block index based on the first interlaced resource block index, an offset value, and the number of interlaced resource blocks within a resource block set; or determining the second interlaced resource block index based on the first interlaced resource block index and a predefined rule.

In this embodiment, when the second interlaced resource block index is determined, the second interlaced resource block index may be determined based on the first interlaced resource block index and a predefined rule. The predefined rule may specify the relationship between the first interlaced resource block indicated by the first interlaced resource block index and the second interlaced resource block indicated by the second interlaced resource block index. Thus, the second interlaced resource block index can be determined based on the first interlaced resource block index and the predefined rule. For example, the predefined rule may designate the next interlaced resource block adjacent to the first interlaced resource block as the second interlaced resource block.

In this embodiment, when the second interlaced resource block index is determined, the second interlaced resource block may also be determined based on the first interlaced resource block index, combined with the number of interlaced resource blocks within the resource block set and a set offset value. The specific determination method is not limited here.

In an example, the second interlaced resource block index may be determined using the following formula: Second IRB index = $\text{mod}(\text{first IRB index} + offset, M)$, where $offset$ is the offset value, and $M$ is the number of interlaced resource blocks within the resource block set.

In an embodiment, determining the frequency domain resource position within the sidelink bandwidth part for mapping the synchronization resource includes determining a resource block set index and an interlaced resource block index, where the resource block set index and the interlaced resource block index are preconfigured or configured through signaling.

Physical resource blocks on an interlaced resource block indicated by the interlaced resource block index are used to carry the sidelink synchronization broadcast information block, and the interlaced resource block is an interlaced resource block on a resource block set indicated by the resource block set index.

In this embodiment, the RB set index and IRB index may be configured through RRC signaling or preconfiguration, and 11 RBs on the IRB within the RB set carry the S-SSB resources.

In this embodiment, one interlaced resource block index may be provided, and the sidelink synchronization broadcast information block is mapped using one interlaced resource block.

In an embodiment, determining the frequency domain resource position within the sidelink bandwidth part for mapping the synchronization resource includes determining an absolute radio frequency channel number, where the absolute radio frequency channel number is preconfigured or configured through signaling; and determining a resource block set index and an interlaced resource block index based on resource elements within the sidelink bandwidth part where the absolute radio frequency channel number is located.

Physical resource blocks on an interlaced resource block indicated by the interlaced resource block index are used to carry the sidelink synchronization broadcast information block, and the interlaced resource block is an interlaced resource block on a resource block set indicated by the resource block set index.

In this embodiment, one interlaced resource block index may be provided, and the sidelink synchronization broadcast information block is mapped using one interlaced resource block.

In an example, an ARFCN frequency domain position is configured through RRC signaling or preconfiguration, and the RB set index and IRB index of the S-SSB resources are determined based on the REs within the SL BWP where the ARFCN is located. Further, 11 RBs on the IRB within the RB set carry the S-SSB resources. The position of the ARFCN may be used to determine the resource block set to which the ARFCN belongs and the corresponding first interlaced resource block index.

In an embodiment, determining the frequency domain resource position within the sidelink bandwidth part for mapping the synchronization resource includes determining a resource block set index, where the resource block set index is preconfigured or configured through signaling; and determining an index of an interlaced resource block where a first physical resource block on a resource block set indicated by the resource block set index is located as an interlaced resource block index.

Physical resource blocks on an interlaced resource block indicated by the interlaced resource block index are used to carry the sidelink synchronization broadcast information block, and the interlaced resource block is an interlaced resource block on a resource block set indicated by the resource block set index.

In this embodiment, the RB set index may be configured through RRC signaling or preconfiguration. Further, the IRB where the first RB of the RB set is located is determined. The 11 RBs on the IRB within the RB set carry the S-SSB resources.

In an embodiment, mapping the sidelink synchronization broadcast information block based on the time domain resource position and the frequency domain resource position includes: mapping first information of the sidelink synchronization broadcast information block on physical resource blocks of an interlaced resource block indicated by the interlaced resource block index on a first time domain symbol in a slot corresponding to a slot index; and mapping second information of the sidelink synchronization broadcast information block on physical resource blocks of an interlaced resource block indicated by the interlaced resource block index on a second time domain symbol in the slot corresponding to the slot index.

The interlaced resource block is an interlaced resource block on a resource block set indicated by the resource block set index, and the first time domain symbol and the second time domain symbol are different symbols within the same slot.

The slot index is included in the time domain resource position.

The first time domain symbol may be a time domain symbol within the slot indicated by the slot index, and the physical resource blocks of the interlaced resource block indicated by the interlaced resource block index on this time domain symbol may be used to map the first information of the sidelink synchronization broadcast information block.

The second time domain symbol may be another time domain symbol within the slot indicated by the slot index, and the physical resource blocks of the interlaced resource block indicated by the interlaced resource block index on this time domain symbol may be used to map the second information of the sidelink synchronization broadcast information block.

In an embodiment, the interlaced resource block index includes a first interlaced resource block index and a second interlaced resource block index, the interlaced resource block indicated by the interlaced resource block index is on the first time domain symbol or the second time domain symbol, and mapping the sidelink synchronization broadcast information block on the physical resource blocks of the interlaced resource block indicated by the interlaced resource block index includes the following:

Multiple logical resource blocks of the sidelink synchronization broadcast information block are sequentially mapped on first physical resource blocks of an interlaced resource block indicated by the first interlaced resource block index and second physical resource blocks of an interlaced resource block indicated by the second interlaced resource block index.

After mapping each logical resource block of the sidelink synchronization broadcast information block, the mapping of logical resource blocks of the sidelink synchronization broadcast information block is continued until both the first physical resource blocks and the second physical resource blocks are fully mapped.

This embodiment is applicable to the interlaced resource block indicated by the interlaced resource block index on the first time domain symbol, as well as the interlaced resource block indicated by the interlaced resource block index on the second time domain symbol.

The mapping of the first time domain symbol is associated with the first information of the sidelink synchronization broadcast information block, and the mapping of the second time domain symbol is associated with the second information of the sidelink synchronization broadcast information block.

In this embodiment, mapping of the sidelink synchronization broadcast information block is performed with reference to physical resource blocks.

In this embodiment, all physical resource blocks included in the first interlaced resource block index and the second interlaced resource block index are first determined. Then, the sidelink synchronization broadcast information block is sequentially mapped onto the physical resource blocks. After the sidelink synchronization broadcast information block is fully mapped, the logical resource blocks of the sidelink synchronization broadcast information block that have already been mapped may be repeatedly mapped until all physical resource blocks are mapped.

The logical resource blocks may be regarded as resource blocks of the sidelink synchronization broadcast information block. The first physical resource blocks may be regarded as the resource blocks of the interlaced resource block indicated by the first interlaced resource block index. The second physical resource blocks may be regarded as the resource blocks of the interlaced resource block indicated by the second interlaced resource block index.

In an example, the resources of the S-SSB are sequentially mapped on all PRBs included in the first interlaced resource block and the second interlaced resource block. After the mapping is complete, the mapping continues repeatedly until the end position of all PRBs included in the first interlaced resource block and the second interlaced resource block. That is, the mapping rule adopted in the mapping of the logical resource blocks in the sidelink synchronization broadcast information block on all PRBs is as follows: 1st, 2nd, 3rd, 4th, ..., 11th, 1st, 2nd, 3rd, 4th, ..., 9th. That is, on 20 RBs, from the 1st RB to the 11th RB, RB0 to RB10 (that is, 1st, 2nd, 3rd, 4th, ..., 11th) of the S-SSB are sequentially mapped; then, from the 12th RB to the 20th RB, RB0 to RB8 (that is, 1st, 2nd, 3rd, 4th, ..., 9th) of the S-SSB are sequentially and repeatedly mapped.

This embodiment uses two interlaced resource blocks as an example for illustration. For more interlaced resource blocks, reference may be made to the mapping method of two interlaced resource blocks, or adaptive modifications may be made.

In an embodiment, the interlaced resource block index includes a first interlaced resource block index and a second interlaced resource block index, the interlaced resource block indicated by the interlaced resource block index is on the first time domain symbol or the second time domain symbol, and mapping the sidelink synchronization broadcast information block on the physical resource blocks of the interlaced resource block indicated by the interlaced resource block index includes the following:

A first part of the sidelink synchronization broadcast information block is mapped on physical resource blocks of a first interlaced resource block indicated by the first interlaced resource block index.

A second part of the sidelink synchronization broadcast information block is mapped on physical resource blocks of a second interlaced resource block indicated by the second interlaced resource block index.

An overlap exists between the first part and the second part.

This embodiment is applicable to the interlaced resource block indicated by the interlaced resource block index on the first time domain symbol, as well as the interlaced resource block indicated by the interlaced resource block index on the second time domain symbol.

The mapping of the first time domain symbol is associated with the first information of the sidelink synchronization broadcast information block, and the mapping of the second time domain symbol is associated with the second information of the sidelink synchronization broadcast information block.

This embodiment, with reference to interlaced resource blocks, first maps one interlaced resource block, and after completing the mapping of that interlaced resource block, maps the next interlaced resource block. That is, the first part of the sidelink synchronization broadcast information block is mapped onto the physical resource blocks of the first interlaced resource block. After the first interlaced resource block is fully mapped, the second part of the sidelink synchronization broadcast information block is mapped onto the physical resource blocks of the second interlaced resource block. The second part overlaps with the first part, and the second part includes logical resource blocks of the sidelink synchronization broadcast information block that are not included in the first part.

In an embodiment, mapping the first part of the sidelink synchronization broadcast information block on the physical resource blocks of the first interlaced resource block indicated by the first interlaced resource block index includes: mapping $m$ logical resource blocks of the sidelink synchronization broadcast information block, starting from a first logical resource block, onto the physical resource blocks of the first interlaced resource block indicated by the first interlaced resource block index until the physical resource blocks of the first interlaced resource block are all mapped.

The first interlaced resource block may include part of the $m$ logical resource blocks, and the logical resource blocks among the m logical resource blocks that are not mapped by the first interlaced resource block may be mapped onto the second interlaced resource block.

In an embodiment, mapping the second part of the sidelink synchronization broadcast information block on the physical resource blocks of the second interlaced resource block indicated by the second interlaced resource block index includes: mapping $m$ logical resource blocks of the sidelink synchronization broadcast information block, starting from an n-th logical resource block to the last logical resource block, onto the physical resource blocks of the second interlaced resource block indicated by the second interlaced resource block index.

In an embodiment, the 10 RBs of the second interlaced resource block map RB1 to RB10 of the S-SSB. The first interlaced resource block may map RB0 to RB9 of the S-SSB. The value of n is not limited here, as long as it is ensured that the first interlaced resource block and the second interlaced resource block can fully map all logical resource blocks included in the sidelink synchronization broadcast information block. For example, n may be 2.

In an embodiment, the value of $(m - n + 1)$ equals the number of physical resource blocks on the second interlaced resource block.

In an embodiment, mapping the second part of the sidelink synchronization broadcast information block on the physical resource blocks of the second interlaced resource block indicated by the second interlaced resource block index includes: mapping at least logical resource blocks of the sidelink synchronization broadcast information block that are not mapped on the first interlaced resource block onto the physical resource blocks of the second interlaced resource block indicated by the second interlaced resource block index; and mapping logical resource blocks of the sidelink synchronization broadcast information block onto unmapped physical resource blocks of the second interlaced resource block indicated by the second interlaced resource block index, where the logical resource blocks mapped onto the unmapped physical resource blocks are logical resource blocks of the sidelink synchronization broadcast information block that have already been mapped on the first interlaced resource block.

The logical resource blocks mapped onto the physical resource blocks of the second interlaced resource block include logical resource blocks of the sidelink synchronization broadcast information block that are not mapped by the first interlaced resource block, as well as logical resource blocks of the sidelink synchronization broadcast information block that are repeatedly mapped by both the first interlaced resource block and the second interlaced resource block.

The unmapped physical resource blocks may be regarded as physical resource blocks that are not mapped with the logical resource blocks of the sidelink synchronization broadcast information block that are mapped on the first interlaced resource block.

In an embodiment, one interlaced resource block index is provided, the interlaced resource block indicated by the interlaced resource block index is on the first time domain symbol or the second time domain symbol, and mapping the sidelink synchronization broadcast information block on the physical resource blocks of the interlaced resource block indicated by the interlaced resource block index includes: mapping the sidelink synchronization broadcast information block on physical resource blocks of an interlaced resource block indicated by the interlaced resource block index.

This embodiment is applicable to the interlaced resource block indicated by the interlaced resource block index on the first time domain symbol, as well as the interlaced resource block indicated by the interlaced resource block index on the second time domain symbol.

The first information of the sidelink synchronization broadcast information block is mapped to the first time domain symbol, and the second information of the sidelink synchronization broadcast information block is mapped to the second time domain symbol.

In an example, after determining 11 RBs on one interlaced resource block, all symbols of the S-SSB are sequentially mapped onto the 11 RBs from the first RB to the last RB.

In an embodiment, the second information includes symbols corresponding to a physical sidelink broadcast channel, and mapping the second information of the sidelink synchronization broadcast information block on the physical resource blocks of the interlaced resource block indicated by the interlaced resource block index on the second time domain symbol in the slot corresponding to the slot index includes: performing rate matching on symbols related to the physical sidelink broadcast channel on the physical resource blocks of the interlaced resource block indicated by the interlaced resource block index on the second time domain symbol in the slot corresponding to the slot index, and mapping the symbols related to the physical sidelink broadcast channel onto all physical resource blocks indicated by the interlaced resource block index on the second time domain symbol.

The second information includes symbols corresponding to a physical sidelink broadcast channel, and the symbols corresponding to the physical sidelink broadcast channel are symbols obtained after rate matching is performed on the symbols related to the physical sidelink broadcast channel.

After rate matching is performed on the symbols related to the physical sidelink broadcast channel, the symbols related to the physical sidelink broadcast channel are mapped onto all physical resource blocks indicated by the interlaced resource block index on the second time domain symbol. Symbols may include signals and/or channels. A channel may be regarded as symbols carrying data. Signals may include reference signals.

Symbols related to the physical sidelink broadcast channel include: symbols carrying the sidelink broadcast channel, a transport channel carrying the sidelink broadcast channel, the sidelink broadcast channel, and/or encoded symbols carrying the sidelink broadcast channel.

In an embodiment, mapping the sidelink synchronization broadcast information block based on the time domain resource position and the frequency domain resource position includes: selecting frequency domain resource elements for mapping the sidelink synchronization broadcast information block from frequency domain resource elements indicated by the frequency domain resource position according to a frequency domain pattern; mapping symbols corresponding to a physical sidelink broadcast channel on selected frequency domain resource elements on a second time domain symbol in the slot corresponding to the slot index; and mapping symbols corresponding to a sidelink synchronization signal on a selected part of frequency domain resource elements on a first time domain symbol in a slot corresponding to a slot index.

The first time domain symbol and the second time domain symbol are different time domain symbols within the slot.

The slot index is included in the time domain resource position.

The frequency domain pattern may be regarded as a pattern in the frequency domain. Based on the pattern, a frequency domain resource unit may be selected from the frequency domain resource units for mapping the sidelink synchronization broadcast information block.

Part of the frequency domain resource units may be a portion of the selected frequency domain resource units. Part of the selected frequency domain resource units are used to map the sidelink synchronization broadcast information block.

In an example, after determining 20 RBs on two interlaced resource blocks, 132 REs are mapped out of a total of 240 REs across the 20 RBs according to a specific frequency domain pattern. Further, for the PSBCH, the 132 symbols of the PSBCH are sequentially mapped onto the 132 REs from the first RE to the 132nd RE. For the S-PSS/S-SSS, the 127 symbols of the S-PSS/S-SSS are sequentially mapped onto the 132 REs from the 3rd RE to the 129th RE.

In an embodiment, the frequency domain resource elements indicated by the frequency domain resource position are divided into different resource element groups; and the frequency domain pattern includes a frequency domain pattern between the resource element groups and a frequency domain pattern within each resource element group.

The frequency domain pattern between resource unit groups may be used to determine how many logical resource blocks each resource unit group needs to map, while the frequency domain pattern within each resource unit group may be used to determine how logical resource blocks are mapped within a single resource unit group, that is, which resource units map the logical resource blocks.

In an embodiment, mapping the sidelink synchronization broadcast information block based on the time domain resource position and the frequency domain resource position includes the following:

If the number of physical resource blocks of an interlaced resource block indicated by an interlaced resource block index indicated by an interlaced resource module index on a time domain symbol in a slot corresponding to a slot index is greater than or equal to the number of logical resource blocks of the sidelink synchronization broadcast information block, the sidelink synchronization broadcast information block is mapped on the physical resource blocks of the interlaced resource block.

Otherwise, the sidelink synchronization broadcast information block is mapped using interlaced resource blocks indicated by two interlaced resource block indices.

The slot index is included in the time domain resource position.

If the number of physical resource blocks on one interlaced resource block is greater than or equal to the number of logical resource blocks of the sidelink synchronization broadcast information block, one interlaced resource block may be used to map the logical resource blocks of the sidelink synchronization broadcast information block. Otherwise, multiple interlaced resource blocks, such as two interlaced resource blocks, may be used to map the logical resource blocks of the sidelink synchronization broadcast information block.

In an example, if 11 physical resource blocks are determined on one interlaced resource block, one interlaced resource block is used to map the S-SSB resources. If only 10 physical resource blocks are determined on one interlaced resource block, two interlaced resource blocks are used to map the S-SSB resources.

In an embodiment, at least one of the slot index or the symbol index is determined by one or more of the following: signaling configuration; predefinition; and preconfiguration.

The slot index and/or symbol index may be configured by RRC, preconfigured, and/or predefined.

In an example embodiment, the present disclosure also provides a resource determination method. FIG. 6 is a flowchart of another resource determination method according to an embodiment of the present disclosure. This method is applicable to scenarios where the sidelink synchronization broadcast information block is received and the OCB requirement on the unlicensed spectrum in a region is satisfied. The method may be executed by a resource determination apparatus provided by the present disclosure. The apparatus may be implemented by software and/or hardware and integrated into a second communication node. For content not exhaustively described in this embodiment, reference may be made to the preceding embodiments, and details are not repeated here.

As shown in FIG. 6, the resource determination method provided by the present disclosure includes S210 and S220.

In S210, a time domain resource position and a frequency domain resource position within a sidelink bandwidth part for mapping a synchronization resource are determined, where the frequency domain resource position includes a resource block set index and an interlaced resource block index.

In S220, a sidelink synchronization broadcast information block is received based on the time domain resource position and the frequency domain resource position.

This embodiment may be executed by a receiving UE. Therefore, after the time domain resource position and the frequency domain resource position are determined, the sidelink synchronization broadcast information block transmitted by the first communication node may be received at the determined time domain resource position and frequency domain resource position. For content not exhaustively described in this embodiment, reference may be made to the preceding embodiments. The difference lies in that the embodiments for the first communication node involve mapping the sidelink synchronization broadcast information block, while this embodiment involves receiving the sidelink synchronization broadcast information block.

The embodiment of the present disclosure provides a resource determination method. In this method, a time domain resource position and a frequency domain resource position are determined, and a sidelink synchronization broadcast information block is received on the frequency domain resources indicated by the frequency domain resource position at the time domain resource position. The frequency domain resource position includes a resource block set index and an interlaced resource block index. The communication of the sidelink synchronization broadcast information block is implemented based on interlaced resource blocks, satisfying the OCB requirement on the unlicensed spectrum in the region.

Based on the preceding embodiments, variant embodiments of the preceding embodiments are proposed. It should be noted that for brevity, only the differences from the preceding embodiments are described in the variant embodiments.

In an embodiment, at least one resource block set index is provided, and at least one interlaced resource block index is provided.

In an embodiment, determining the frequency domain resource position within the sidelink bandwidth part for mapping the synchronization resource includes determining a resource block set index, a first interlaced resource block index, and a second interlaced resource block index, where the resource block set index, the first interlaced resource block index, and the second interlaced resource block index are preconfigured or configured through signaling.

Physical resource blocks on a first interlaced resource block indicated by the first interlaced resource block index and physical resource blocks on a second interlaced resource block indicated by the second interlaced resource block index are used to carry the sidelink synchronization broadcast information block, and the first interlaced resource block and the second interlaced resource block are interlaced resource blocks on a resource block set indicated by the resource block set index.

In an embodiment, determining the frequency domain resource position within the sidelink bandwidth part for mapping the synchronization resource includes determining a preconfigured or signaling-configured resource block set index and a first interlaced resource block index; and determining a second interlaced resource block index.

In an embodiment, determining the frequency domain resource position within the sidelink bandwidth part for mapping the synchronization resource includes determining an absolute radio frequency channel number, where the absolute radio frequency channel number is preconfigured or configured through signaling; determining a resource block set index and a first interlaced resource block index based on resource elements within the sidelink bandwidth part where the absolute radio frequency channel number is located; and determining a second interlaced resource block index.

In an embodiment, determining the frequency domain resource position within the sidelink bandwidth part for mapping the synchronization resource includes determining a resource block set index, where the resource block set index is preconfigured or configured through signaling; determining an index of an interlaced resource block where a first physical resource block on a resource block set indicated by the resource block set index is located as a first interlaced resource block index; and determining a second interlaced resource block index.

In an embodiment, determining the second interlaced resource block index includes: determining the second interlaced resource block index based on the first interlaced resource block index, an offset value, and the number of interlaced resource blocks within a resource block set; or determining the second interlaced resource block index based on the first interlaced resource block index and a predefined rule.

In an embodiment, determining the frequency domain resource position within the sidelink bandwidth part for mapping the synchronization resource includes determining a resource block set index and an interlaced resource block index, where the resource block set index and the interlaced resource block index are preconfigured or configured through signaling.

Physical resource blocks on an interlaced resource block indicated by the interlaced resource block index are used to carry the sidelink synchronization broadcast information block, and the interlaced resource block is an interlaced resource block on a resource block set indicated by the resource block set index.

In an embodiment, determining the frequency domain resource position within the sidelink bandwidth part for mapping the synchronization resource includes determining an absolute radio frequency channel number, where the absolute radio frequency channel number is preconfigured or configured through signaling; and determining a resource block set index and an interlaced resource block index based on resource elements within the sidelink bandwidth part where the absolute radio frequency channel number is located.

Physical resource blocks on an interlaced resource block indicated by the interlaced resource block index are used to carry the sidelink synchronization broadcast information block, and the interlaced resource block is an interlaced resource block on a resource block set indicated by the resource block set index.

In an embodiment, determining the frequency domain resource position within the sidelink bandwidth part for mapping the synchronization resource includes determining a resource block set index, where the resource block set index is preconfigured or configured through signaling; and determining an index of an interlaced resource block where a first physical resource block on a resource block set indicated by the resource block set index is located as an interlaced resource block index.

Physical resource blocks on an interlaced resource block indicated by the interlaced resource block index are used to carry the sidelink synchronization broadcast information block, and the interlaced resource block is an interlaced resource block on a resource block set indicated by the resource block set index.

In an embodiment, receiving the sidelink synchronization broadcast information block based on the time domain resource position and the frequency domain resource position includes the following: receiving first information of the sidelink synchronization broadcast information block on physical resource blocks of an interlaced resource block indicated by the interlaced resource block index on a first time domain symbol in a slot corresponding to a slot index; and receiving second information of the sidelink synchronization broadcast information block on physical resource blocks of an interlaced resource block indicated by the interlaced resource block index on a second time domain symbol in the slot corresponding to the slot index.

The interlaced resource block is an interlaced resource block on a resource block set indicated by the resource block set index, and the first time domain symbol and the second time domain symbol are different symbols within the same slot. The slot index is included in the time domain resource position.

In an embodiment, the interlaced resource block index includes a first interlaced resource block index and a second interlaced resource block index, the interlaced resource block indicated by the interlaced resource block index is on the first time domain symbol or the second time domain symbol, and receiving the sidelink synchronization broadcast information block on the physical resource blocks of the interlaced resource block indicated by the interlaced resource block index includes the following:

Each logical resource block of the sidelink synchronization broadcast information block is received on first physical resource blocks of an interlaced resource block indicated by the first interlaced resource block index and second physical resource blocks of an interlaced resource block indicated by the second interlaced resource block index. The slot index is included in the time domain resource position.

In an embodiment, the interlaced resource block index includes a first interlaced resource block index and a second interlaced resource block index, the interlaced resource block indicated by the interlaced resource block index is on the first time domain symbol or the second time domain symbol, and receiving the sidelink synchronization broadcast information block on the physical resource blocks of the interlaced resource block indicated by the interlaced resource block index includes the following:

A first part of the sidelink synchronization broadcast information block is received on physical resource blocks of a first interlaced resource block indicated by the first interlaced resource block index.
A second part of the sidelink synchronization broadcast information block is received on physical resource blocks of a second interlaced resource block indicated by the second interlaced resource block index.

An overlap exists between the first part and the second part.

In an embodiment, receiving the second part of the sidelink synchronization broadcast information block on the physical resource blocks of the second interlaced resource block indicated by the second interlaced resource block index includes: receiving logical resource blocks mapped from the $n$-th logical resource block to the last logical resource block among $m$ logical resource blocks of the sidelink synchronization broadcast information block on the physical resource blocks of the second interlaced resource block indicated by the second interlaced resource block index.

In an embodiment, the value of $(m - n + 1)$ equals the number of physical resource blocks on the second interlaced resource block.

In an embodiment, one interlaced resource block index is provided, the interlaced resource block indicated by the interlaced resource block index is on the first time domain symbol or the second time domain symbol, and receiving the sidelink synchronization broadcast information block on the physical resource blocks of the interlaced resource block indicated by the interlaced resource block index includes: receiving the sidelink synchronization broadcast information block on physical resource blocks of an interlaced resource block indicated by the interlaced resource block index.

In an embodiment, receiving the sidelink synchronization broadcast information block based on the time domain resource position and the frequency domain resource position includes: selecting frequency domain resource elements for mapping the sidelink synchronization broadcast information block from frequency domain resource elements indicated by the frequency domain resource position according to a frequency domain pattern; receiving symbols corresponding to a physical sidelink broadcast channel on selected frequency domain resource elements on a second time domain symbol in a slot corresponding to a slot index; and receiving symbols corresponding to a sidelink synchronization signal on a selected part of frequency domain resource elements on a first time domain symbol in the slot corresponding to the slot index.

The first time domain symbol and the second time domain symbol are different time domain symbols within the slot.

The slot index is included in the time domain resource position.

In an embodiment, the frequency domain resource elements indicated by the frequency domain resource position are divided into different resource element groups; and the frequency domain pattern includes a frequency domain pattern between the resource element groups and a frequency domain pattern within each resource element group.

In an embodiment, receiving the sidelink synchronization broadcast information block based on the time domain resource position and the frequency domain resource position includes the following:

If the number of physical resource blocks of an interlaced resource block indicated by an interlaced resource block index indicated by an interlaced resource module index on a time domain symbol in a slot corresponding to a slot index is greater than or equal to the number of logical resource blocks of the sidelink synchronization broadcast information block, the sidelink synchronization broadcast information block is received on the physical resource blocks of the interlaced resource block.

Otherwise, the sidelink synchronization broadcast information block is received on interlaced resource blocks indicated by two interlaced resource block indices.

The slot index is included in the time domain resource position.

In an embodiment, at least one of the slot index or the symbol index is determined by one or more of the following: signaling configuration; predefinition; and preconfiguration.

An exemplary description of the present disclosure is provided below. The resource determination method provided by the embodiments of the present disclosure may be regarded as a method for determining a synchronization resource.

In the legacy NR Rel-16/Rel-17 SL protocol, the S-SSB resources are defined to occupy all symbols in a slot except the last symbol in the time domain and continuously occupy 11 RBs in the frequency domain. The specific frequency domain position of the S-SSB resources is obtained through configured or preconfigured higher-layer signaling sl-AbsoluteFrequencyS-SSB.

When an SL device operates on an unlicensed spectrum, the SL device also needs to configure S-SSB resources on the SL. To meet the OCB requirement on the unlicensed spectrum, generally, the occupied bandwidth in the frequency domain of the signal needs to account for more than 80% of an RB set, that is, more than 80% of the bandwidth resources of an RB set, either by occupying more than 80% of the continuous RB resources in an RB set or by occupying at least one interlaced resource block in the RB set. When a signal transmission scheme based on interlaced resource blocks is used, a problem arises, that is, the number of RBs corresponding to the SSB resources on an interlaced resource block within an RB set is only 10. Therefore, directly adopting the frequency domain resource mapping scheme of the legacy Rele-16/17 SL S-SSB encounters issues. The present disclosure proposes a method to determine the frequency domain resource position of the S-SSB and further address the mapping problem of S-SSB resources on the interlaced RB frequency domain resources on the unlicensed spectrum.

FIG. 7 is a schematic diagram of an S-SSB according to an embodiment of the present disclosure. As shown in FIG. 7, the SSB performs resource mapping on at least one interlaced resource block within one RB set in the SL BWP. The internal RE index numbering in the frequency domain of the S-SSB is as described in Table 1, from RE0 to RE131. The RB indices may be denoted as RB0 to RB10, totaling 11 RBs.

In NR Rel-16/17 SL, the SSB occupies 11 consecutive PRBs in the frequency domain. However, when transmission based on an interlaced resource block within an RB set is selected, an interlaced resource block within the RB set may only have 10 RBs. When mapping S-SSB resources requires 11 RBs on 10 RBs, regardless of the method used, a certain performance loss exists relative to S-SSB transmission. To avoid this situation, the present disclosure, in such cases, maps the S-SSB on two interlaced resource blocks within the RB set, with each interlaced resource block using 10 RBs for resource mapping. Specifically, an S-SSB resource determination method and an S-SSB resource mapping method are included.

The S-SSB resource determination method includes the following embodiments:

In the embodiments described below, the frequency domain resource position is used as an example for illustration. The time domain resource position may be preconfigured, predefined, and/or configured by signaling. The frequency domain resource position may correspond to the time domain resource position.

In an example, the S-SSB resource determination method may determine two interlaced resource blocks to map the SSB resources. This example includes the following four methods:

Method 1: the following index is preconfigured and/or configured through RRC signaling: an RB set index, a first IRB index, and a second IRB index (that is, determining a resource block set index, a first interlaced resource block index, and a second interlaced resource block index, where the resource block set index, the first interlaced resource block index, and the second interlaced resource block index are preconfigured or configured through signaling). The 20 RBs on the IRBs within the RB set carry the S-SSB resources.

The 20 RBs includes the first RB to the 10th RB on the first IRB and the first RB to the 10th RB on the second IRB.

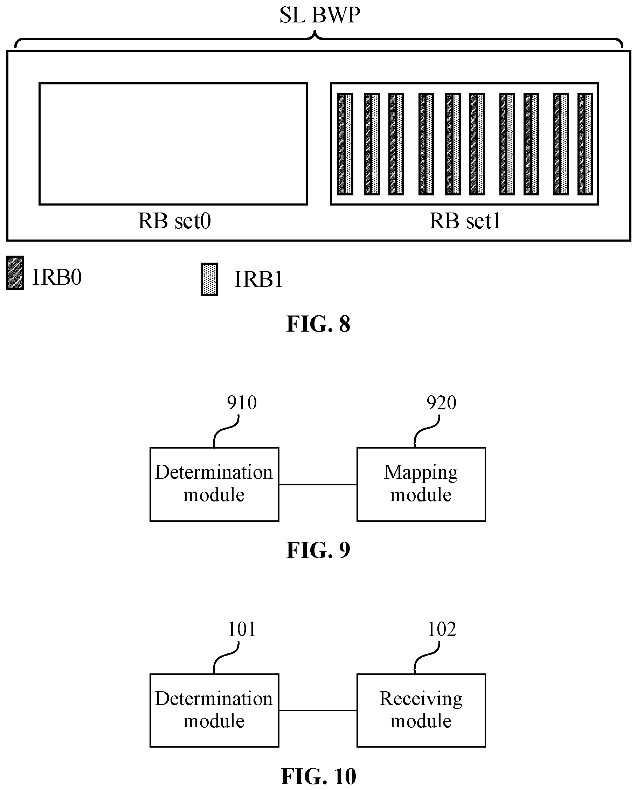

FIG. 8 is a schematic diagram illustrating the carrying of S-SSB resources according to an embodiment of the present disclosure. As shown in FIG. 8, in an embodiment, 20 RBs on IRB0 and IRB1 within RB set1 in the SL BWP are configured through the RRC signaling to carry the S-SSB resources.

Method 2: the following index is preconfigured and/or configured through RRC signaling: an RB set index and a first IRB index (that is, determining a resource block set index and a first interlaced resource block index, and the resource block set index and the first interlaced resource block index are preconfigured or configured through signaling).

The UE determines the second IRB index based on a predefined rule or a configured or preconfigured offset value, that is, offset, where the second IRB index = mod(first IRB index + *offset, M*), and *M* is the number of interlaced resource blocks within the RB set.

The 20 RBs on the IRBs within the RB set carry the S-SSB resources.

The 20 RBs consist of the first RB to the 10th RB on the first IRB and the first RB to the 10th RB on the second IRB.

Method 3: an ARFCN is preconfigured or configured through RRC signaling (that is, determining an absolute radio frequency channel number, where the absolute radio frequency channel number is preconfigured or configured through signaling). The RB set index and the first IRB index of the S-SSB resources are determined based on the REs within the SL BWP where the ARFCN is located. That is, a resource block set index and a first interlaced resource block index are determined based on resource elements within the sidelink bandwidth part where the ARFCN is located. The UE determines the second IRB index based on a predefined rule or a configured or preconfigured offset (that is, determining the second interlaced resource block index based on the first interlaced resource block index and a predefined rule; or determining the second interlaced resource block index based on the first interlaced resource block index, an offset value, and the number of interlaced resource blocks within a resource block set). The second IRB index = mod(first IRB index + *offset, M*), where *M* is the number of interlaced resource blocks within the RB set.

The 20 RBs, including the first RB to the 10th RB on the first interlaced resource block and the first RB to the 10th RB on the second interlaced resource block within the RB set, carry the S-SSB resources.

Method 4: an RB set index is preconfigured or configured through RRC signaling (that is, determining a resource block set index, where the resource block set index is preconfigured or configured through signaling). The interlaced resource block where the first RB of the RB set is located is determined as the first interlaced resource block. That is, an index of an interlaced resource block where a first physical resource block on a resource block set indicated by the resource block set index is located is determined as the first interlaced resource block index. The UE determines the second IRB index based on a predefined rule or a configured or preconfigured offset, where the second IRB index = mod(first IRB index + *offset, M*), and *M* is the number of interlaced resource blocks within the RB set.

The 20 RBs, including the first RB to the 10th RB on the first interlaced resource block and the first RB to the 10th RB on the second interlaced resource block within the RB set, carry the S-SSB resources.

In an example, the S-SSB resource determination method determines one interlaced resource block within the RB set to map the SSB resources, including the following three methods:

Method 5: an RB set index and an IRB index are preconfigured or configured through RRC signaling (that is, determining a resource block set index and an interlaced resource block index, where the resource block set index and the interlaced resource block index are preconfigured or configured through signaling). The 11 RBs on the IRB within the RB set carry the S-SSB resources.

Method 6: a frequency domain position ARFCN is preconfigured or configured through RRC signaling (that is, determining the ARFCN, the ARFCN is preconfigured or configured through signaling). The RB set index and the IRB index of the S-SSB resources are determined based on the REs within the SL BWP where the ARFCN is located. That is, a resource block set index and an interlaced resource block index are determined based on resource elements within the sidelink bandwidth part where the ARFCN is located. The 11 RBs on the IRB within the RB set carry the S-SSB resources, that is, physical resource blocks on an interlaced resource block indicated by the interlaced resource block index are used to carry the sidelink synchronization broadcast information block.

Method 7: an RB set index is preconfigured or configured through RRC signaling (that is, determining a resource block set index, where the resource block set index is preconfigured or configured through signaling). The interlaced IRB where the first RB of the RB set is located is determined. That is, an index of an interlaced resource block where a first physical resource block on a resource block set indicated by the resource block set index is located is determined as an interlaced resource block index. The 11 RBs on the interlaced IRB within the RB set carry the S-SSB resources, that is, physical resource blocks on an interlaced resource block indicated by the interlaced resource block index are used to carry the sidelink synchronization broadcast information block.

The S-SSB resource mapping method includes the following embodiments:

In an example, using two interlaced resource blocks to map the SSB resources includes the following three methods: Method 8: After 20 RBs on two interlaced resource blocks are determined using method 1/2/3/4, RB0 to RB9 of the S-SSB are mapped onto the 10 RBs of the first interlaced resource block, and RB1 to RB10 of the S-SSB are mapped onto the 10 RBs of the second interlaced resource block. That is, $m$ logical resource blocks of the sidelink synchronization broadcast information block, starting from a first logical resource block, are mapped onto the physical resource blocks of the first interlaced resource block indicated by the first interlaced resource block index until the physical resource blocks of the first interlaced resource block are all mapped. m logical resource blocks of the sidelink synchronization broadcast information block, starting from an n-th logical resource block to the last logical resource block, are mapped onto the physical resource blocks of the second interlaced resource block indicated by the second interlaced resource block index, where n is 2.

The transmitting UE (that is, the first communication node) maps the S-SSB resources according to the preceding rules, and the receiving UE (that is, the second communication node) detects and receives the S-SSB signal according to the preceding rules.

Method 9: After 20 RBs on two interlaced resource blocks are determined using method 1/2/3/4, RB0 to RB10 of the S-SSB are sequentially mapped from the first RB to the 11th RB across the 20 RBs, and then RB0 to RB8 of the S-SSB are sequentially and repeatedly mapped from the 12th RB to the 20th RB. That is, $m$ logical resource blocks of the sidelink synchronization broadcast information block, starting from a first logical resource block, are mapped onto the physical resource blocks of the first interlaced resource block indicated by the first interlaced resource block index until the physical resource blocks of the first interlaced resource block are all mapped. At least logical resource blocks of the sidelink synchronization broadcast information block that are not mapped on the first interlaced resource block are mapped onto the physical resource blocks of the second interlaced resource block indicated by the second interlaced resource block index. Logical resource blocks of the sidelink synchronization broadcast information block are mapped onto unmapped physical resource blocks of the second interlaced resource block indicated by the second interlaced resource block index, where the logical resource blocks mapped onto the unmapped physical resource blocks are logical resource blocks of the sidelink synchronization broadcast information block that have already been mapped on the first interlaced resource block. The mapped logical resource blocks may be RB0 to RB8.

The transmitting UE maps the S-SSB resources according to the preceding rules, and the receiving UE detects and receives the S-SSB signal according to the preceding rules.

Method 10: After 20 RBs on two interlaced resource blocks are determined using method 1/2/3/4, 132 REs out of a total of 240 REs are mapped across the 20 RBs according to a specific pattern (that is, selecting frequency domain resource elements for mapping the sidelink synchronization broadcast information block from frequency domain resource elements indicated by the frequency domain resource position according to a frequency domain pattern). For the PSBCH, the 132 symbols of the PSBCH are sequentially mapped from the first RE to the 132nd RE among the 132 REs (that is, mapping symbols corresponding to a physical sidelink broadcast channel on selected frequency domain resource elements on a second time domain symbol in a slot). For the S-PSS/S-SSS, the 127 symbols of the S-PSS/S-SSS are sequentially mapped from the 3rd RE to the 129th RE among the 132 REs (that is, mapping symbols corresponding to a sidelink synchronization signal on a selected part of frequency domain resource elements on a first time domain symbol in the slot).

When resource units are selected according to the pattern, the 132 symbols are distributed across 10 RE groups, with each RE group containing 24 consecutive REs.

For the PSBCH, in an example, among 10 RE groups, the 1st to 9th groups each map 13 REs out of 24 REs, and the last RE group maps 15 REs, totaling 132 REs; or the 2nd to 10th groups each map 13 REs out of 24 REs, and the first RE group maps 15 REs, totaling 132 REs.

For the PSBCH, in an example, among 10 RE groups, the 1st to 9th groups each map 14 REs out of 24 REs, and the last RE group maps 6 REs, totaling 132 REs; or the 2nd to 10th groups each map 14 REs out of 24 REs, and the first RE group maps 6 REs, totaling 132 REs.

The mapping of 13 REs out of 24 REs in each group may be based on the frequency domain pattern within the resource unit group. The 10 RE groups may be mapped based on the frequency domain pattern between resource unit groups.

For the PSS/SSS, in an example, among 10 RE groups, the 1st to 9th groups each map 12 REs out of 24 REs, and the last RE group maps 19 REs (that is, the frequency domain pattern between resource unit groups), totaling 127 REs; or the 2nd to 10th groups each map 12 REs out of 24 REs, and the first RE group maps 19 REs, totaling 127 REs.

For the PSS/SSS, in an example, among 10 RE groups, the 1st to 9th groups each map 13 REs out of 24 REs, and the last RE group maps 10 REs, totaling 127 REs; or the 2nd to 10th groups each map 13 REs out of 24 REs, and the first RE group maps 10 REs, totaling 127 REs.

The pattern of REs mapping SSB resources within each RE group and the pattern of REs mapping SSB resources between RE groups are predefined, and the above are only examples.

In an example, one interlaced resource block is used to map the SSB resources, that is, the number of interlaced resource block indices is one. In this case, the following method is included.

Method 11: After 11 RBs on one interlaced resource block are determined using method 5/6/7, all symbols of the S-SSB are sequentially mapped onto the 11 RBs from the first RB to the last RB (that is, mapping the sidelink synchronization broadcast information block on physical resource blocks of an interlaced resource block indicated by the interlaced resource block index).

The transmitting UE maps the S-SSB resources according to the preceding rules, and the receiving UE detects and receives the S-SSB signal according to the preceding rules.

The present disclosure also provides a method that comprehensively considers one interlaced resource block or two interlaced resource blocks (this method includes two S-SSB frequency domain structures).

Method 12: When 11 RBs are determined on one interlaced resource block using method 5/6/7, method 11 is used to map the S-SSB resources. When only 10 RBs are determined on one interlaced resource block using method 5/6/7, method 8, 9, or 10 is used to map the S-SSB resources. That is, if the number of physical resource blocks of an interlaced resource block indicated by an interlaced resource block index is greater than or equal to the number of logical resource blocks of the sidelink synchronization broadcast information block, the sidelink synchronization broadcast information block is mapped on the physical resource blocks of the interlaced resource block. Otherwise, the sidelink synchronization broadcast information block is mapped using interlaced resource blocks indicated by two interlaced resource block indices.

In an example embodiment, the present disclosure provides a resource determination apparatus that may be integrated into a first communication node. FIG. 9 is a diagram illustrating the structure of a resource determination apparatus according to an embodiment of the present disclosure. The apparatus includes a determination module 910 and a mapping module 920.

The determination module 910 is configured to determine a time domain resource position and a frequency domain resource position within a sidelink bandwidth part for mapping a synchronization resource, where the frequency domain resource position includes a resource block set index and an interlaced resource block index.

The mapping module 920 is configured to map a sidelink synchronization broadcast information block based on the time domain resource position and the frequency domain resource position.

The resource determination apparatus provided in this embodiment is configured to implement the resource determination method in the embodiment shown in FIG. 5. The implementation principle and technical effect of the resource determination apparatus provided in this embodiment are similar to the implementation principle and technical effect of the resource determination method in the embodiment shown in FIG. 5, which is not repeated herein.

Based on the preceding embodiments, variant embodiments of the preceding embodiments are proposed. It should be noted that for brevity, only the differences from the preceding embodiments are described in the variant embodiments.

In an embodiment, at least one resource block set index is provided, and at least one interlaced resource block index is provided.

In an embodiment, the determination module 910 is specifically configured to determine a resource block set index, a first interlaced resource block index, and a second interlaced resource block index. The resource block set index, the first interlaced resource block index, and the second interlaced resource block index are preconfigured or configured through signaling.

Physical resource blocks on a first interlaced resource block indicated by the first interlaced resource block index and physical resource blocks on a second interlaced resource block indicated by the second interlaced resource block index are used to carry the sidelink synchronization broadcast information block, and the first interlaced resource block and the second interlaced resource block are interlaced resource blocks on a resource block set indicated by the resource block set index.

In an embodiment, the determination module 910 is specifically configured to determine a resource block set index and a first interlaced resource block index, where the resource block set index and the first interlaced resource block index are preconfigured or configured through signaling; and determine a second interlaced resource block index.

In an embodiment, the determination module 910 is specifically configured to determine an absolute radio frequency channel number, where the absolute radio frequency channel number is preconfigured or configured through signaling; determine a resource block set index and a first interlaced resource block index based on resource elements within the sidelink bandwidth part where the absolute radio frequency channel number is located; and determine a second interlaced resource block index.

In an embodiment, the determination module 910 is specifically configured to determine a resource block set index, where the resource block set index is preconfigured or configured through signaling; determine an index of an interlaced resource block where a first physical resource block on a resource block set indicated by the resource block set index is located as a first interlaced resource block index; and determine a second interlaced resource block index.

In an embodiment, determining the second interlaced resource block index by the determination module 910 includes: determining the second interlaced resource block index based on the first interlaced resource block index, an offset value, and the number of interlaced resource blocks within a resource block set; or determining the second interlaced resource block index based on the first interlaced resource block index and a predefined rule.

In an embodiment, the determination module 910 is specifically configured to determine a resource block set index and an interlaced resource block index. The resource block set index and the interlaced resource block index are preconfigured or configured through signaling.

Physical resource blocks on an interlaced resource block indicated by the interlaced resource block index are used to carry the sidelink synchronization broadcast information block, and the interlaced resource block is an interlaced resource block on a resource block set indicated by the resource block set index.

In an embodiment, the determination module 910 is specifically configured to determine an absolute radio frequency channel number, where the absolute radio frequency channel number is preconfigured or configured through signaling; and determine a resource block set index and an interlaced resource block index based on resource elements within the sidelink bandwidth part where the absolute radio frequency channel number is located.

Physical resource blocks on an interlaced resource block indicated by the interlaced resource block index are used to carry the sidelink synchronization broadcast information block, and the interlaced resource block is an interlaced resource block on a resource block set indicated by the resource block set index.

In an embodiment, the determination module 910 is specifically configured to determine a resource block set index, where the resource block set index is preconfigured or configured through signaling; and determine an index of an interlaced resource block where a first physical resource block on a resource block set indicated by the resource block set index is located as an interlaced resource block index.

Physical resource blocks on an interlaced resource block indicated by the interlaced resource block index are used to carry the sidelink synchronization broadcast information block, and the interlaced resource block is an interlaced resource block on a resource block set indicated by the resource block set index.

In an embodiment, the mapping module 920 is specifically configured to map first information of the sidelink synchronization broadcast information block on physical resource blocks of an interlaced resource block indicated by the interlaced resource block index on a first time domain symbol in a slot corresponding to a slot index; and map second information of the sidelink synchronization broadcast information block on physical resource blocks of an interlaced resource block indicated by the interlaced resource block index on a second time domain symbol in the slot corresponding to the slot index.

The interlaced resource block is an interlaced resource block on a resource block set indicated by the resource block set index, and the first time domain symbol and the second time domain symbol are different symbols within the same slot.

The slot index is included in the time domain resource position.

In an embodiment, the interlaced resource block index includes a first interlaced resource block index and a second interlaced resource block index, the interlaced resource block indicated by the interlaced resource block index is on the first time domain symbol or the second time domain symbol, and the mapping module 920 is specifically configured to perform: sequentially mapping multiple logical resource blocks of the sidelink synchronization broadcast information block on first physical resource blocks of an interlaced resource block indicated by the first interlaced resource block index and second physical resource blocks of an interlaced resource block indicated by the second interlaced resource block index; and after mapping the multiple logical resource blocks of the sidelink synchronization broadcast information block, continuing to map logical resource blocks of the sidelink synchronization broadcast information block until both the first physical resource blocks and the second physical resource blocks are fully mapped.

In an embodiment, the interlaced resource block index includes a first interlaced resource block index and a second interlaced resource block index, the interlaced resource block indicated by the interlaced resource block index is on the first time domain symbol or the second time domain symbol, and the mapping module 920 is specifically configured to perform: mapping a first part of the sidelink synchronization broadcast information block on physical resource blocks of a first interlaced resource block indicated by the first interlaced resource block index; and mapping a second part of the sidelink synchronization broadcast information block on physical resource blocks of a second interlaced resource block indicated by the second interlaced resource block index.

An overlap exists between the first part and the second part.

In an embodiment, the mapping module 920 is specifically configured to map $m$ logical resource blocks of the sidelink synchronization broadcast information block, starting from a first logical resource block, onto the physical resource blocks of the first interlaced resource block indicated by the first interlaced resource block index until the physical resource blocks of the first interlaced resource block are all mapped.

In an embodiment, the mapping module 920 is specifically configured to map $m$ logical resource blocks of the sidelink synchronization broadcast information block, starting from an $n$-th logical resource block to the last logical resource block, onto the physical resource blocks of the second interlaced resource block indicated by the second interlaced resource block index.

In an embodiment, the value of $(m - n + 1)$ equals the number of physical resource blocks on the second interlaced resource block.

In an embodiment, the mapping module 920 is specifically configured to map at least logical resource blocks of the sidelink synchronization broadcast information block that are not mapped on the first interlaced resource block onto the physical resource blocks of the second interlaced resource block indicated by the second interlaced resource block index; and map logical resource blocks of the sidelink synchronization broadcast information block onto unmapped physical resource blocks of the second interlaced resource block indicated by the second interlaced resource block index, where the logical resource blocks mapped onto the unmapped physical resource blocks are logical resource blocks of the sidelink synchronization broadcast information block that have already been mapped on the first interlaced resource block.

In an embodiment, one interlaced resource block index is provided, an interlaced resource block indicated by the interlaced resource block index is on the first time domain symbol or the second time domain symbol, and the mapping module 920 is specifically configured to map the sidelink synchronization broadcast information block on physical resource blocks of the interlaced resource block indicated by the interlaced resource block index.

In an embodiment, the second information includes symbols corresponding to a physical sidelink broadcast channel, and mapping, by the mapping module 920, the second information of the sidelink synchronization broadcast information block on the physical resource blocks of the interlaced resource block indicated by the interlaced resource block index on the second time domain symbol in the slot corresponding to the slot index includes: performing rate matching on symbols related to the physical sidelink broadcast channel on the physical resource blocks of the interlaced resource block indicated by the interlaced resource block index on the second time domain symbol in the slot corresponding to the slot index, and mapping the symbols related to the physical sidelink broadcast channel onto all physical resource blocks indicated by the interlaced resource block index on the second time domain symbol, where the symbols corresponding to the physical sidelink broadcast channel are symbols obtained after rate matching the symbols related to the physical sidelink broadcast channel.

In an embodiment, the mapping module 920 is specifically configured to select frequency domain resource elements for mapping the sidelink synchronization broadcast information block from frequency domain resource elements indicated by the frequency domain resource position according to a frequency domain pattern; map symbols corresponding to a physical sidelink broadcast channel on selected frequency domain resource elements on a second time domain symbol in the slot corresponding to the slot index; and map symbols corresponding to a sidelink synchronization signal on a selected part of frequency domain resource elements on a first time domain symbol in a slot corresponding to a slot index.

The first time domain symbol and the second time domain symbol are different time domain symbols within the slot.

The slot index is included in the time domain resource position.

In an embodiment, the frequency domain resource elements indicated by the frequency domain resource position are divided into different resource element groups; and the frequency domain pattern includes a frequency domain pattern between the resource element groups and a frequency domain pattern within each resource element group.

In an embodiment, the mapping module 920 is specifically configured to perform the following.

If the number of physical resource blocks of an interlaced resource block indicated by an interlaced resource block index indicated by an interlaced resource module index on a time domain symbol in a slot corresponding to a slot index is greater than or equal to the number of logical resource blocks of the sidelink synchronization broadcast information block, the sidelink synchronization broadcast information block is mapped on the physical resource blocks of the interlaced resource block.

Otherwise, the sidelink synchronization broadcast information block is mapped using interlaced resource blocks indicated by two interlaced resource block indices.

The slot index is included in the time domain resource position.

In an embodiment, at least one of the slot index or the symbol index is determined by one or more of the following: signaling configuration; predefinition; and preconfiguration.

In an example embodiment, the embodiment of the present disclosure provides a resource determination apparatus that may be integrated into a second communication node. FIG. 10 is a diagram illustrating the structure of another resource determination apparatus according to an embodiment of the present disclosure. As shown in FIG. 10, the apparatus includes a determination module 101 and a receiving module 102. The determination module 101 is configured to determine a time domain resource position and a frequency domain resource position within a sidelink bandwidth part for mapping a synchronization resource, where the frequency domain resource position includes a resource block set index and an interlaced resource block index. The receiving module 102 is configured to receive a sidelink synchronization broadcast information block based on the time domain resource position and the frequency domain resource position.

The resource determination apparatus provided in this embodiment is configured to implement the resource determination method in the embodiment shown in FIG. 6. The implementation principle and technical effect of the resource determination apparatus provided in this embodiment are similar to the implementation principle and technical effect of the resource determination method in the embodiment shown in FIG. 6, which is not repeated herein.

Based on the preceding embodiments, variant embodiments of the preceding embodiments are proposed. It should be noted that for brevity, only the differences from the preceding embodiments are described in the variant embodiments.

In an embodiment, at least one resource block set index is provided, and at least one interlaced resource block index is provided.

In an embodiment, the determination module 101 is configured to determine a resource block set index, a first interlaced resource block index, and a second interlaced resource block index. The resource block set index, the first interlaced resource block index, and the second interlaced resource block index are preconfigured or configured through signaling.

Physical resource blocks on a first interlaced resource block indicated by the first interlaced resource block index and physical resource blocks on a second interlaced resource block indicated by the second interlaced resource block index are used to carry the sidelink synchronization broadcast information block, and the first interlaced resource block and the second interlaced resource block are interlaced resource blocks on a resource block set indicated by the resource block set index.

In an embodiment, the determination module 101 is configured to determine a resource block set index and a first interlaced resource block index, where the resource block set index and the first interlaced resource block index are preconfigured or configured through signaling; and determine a second interlaced resource block index.

In an embodiment, the determination module 101 is configured to determine an absolute radio frequency channel number, where the absolute radio frequency channel number is preconfigured or configured through signaling; determine a resource block set index and a first interlaced resource block index based on resource elements within the sidelink bandwidth part where the absolute radio frequency channel number is located; and determine a second interlaced resource block index.

In an embodiment, the determination module 101 is configured to determine a resource block set index, where the resource block set index is preconfigured or configured through signaling; determine an index of an interlaced resource block where a first physical resource block on a resource block set indicated by the resource block set index is located as a first interlaced resource block index; and determine a second interlaced resource block index.

In an embodiment, determining the second interlaced resource block index by the determination module 101 includes: determining the second interlaced resource block index based on the first interlaced resource block index, an offset value, and the number of interlaced resource blocks within a resource block set; or determining the second interlaced resource block index based on the first interlaced resource block index and a predefined rule.

In an embodiment, the determination module 101 is configured to determine a resource block set index and an interlaced resource block index. The resource block set index and the interlaced resource block index are preconfigured or configured through signaling.

Physical resource blocks on an interlaced resource block indicated by the interlaced resource block index are used to carry the sidelink synchronization broadcast information block, and the interlaced resource block is an interlaced resource block on a resource block set indicated by the resource block set index.

In an embodiment, the determination module 101 is configured to determine an absolute radio frequency channel number, where the absolute radio frequency channel number is preconfigured or configured through signaling; and determine a resource block set index and an interlaced resource block index based on resource elements within the sidelink bandwidth part where the absolute radio frequency channel number is located.

Physical resource blocks on an interlaced resource block indicated by the interlaced resource block index are used to carry the sidelink synchronization broadcast information block, and the interlaced resource block is an interlaced resource block on a resource block set indicated by the resource block set index.

In an embodiment, the determination module 101 is configured to determine a resource block set index, where the resource block set index is preconfigured or configured through signaling; and determine an index of an interlaced resource block where a first physical resource block on a resource block set indicated by the resource block set index is located as an interlaced resource block index.

Physical resource blocks on an interlaced resource block indicated by the interlaced resource block index are used to carry the sidelink synchronization broadcast information block, and the interlaced resource block is an interlaced resource block on a resource block set indicated by the resource block set index.

In an embodiment, the receiving module 102 is specifically configured to receive first information of the sidelink synchronization broadcast information block on physical resource blocks of an interlaced resource block indicated by the interlaced resource block index on a first time domain symbol in a slot corresponding to a slot index; and receive second information of the sidelink synchronization broadcast information block on physical resource blocks of an interlaced resource block indicated by the interlaced resource block index on a second time domain symbol in the slot corresponding to the slot index.

The interlaced resource block is an interlaced resource block on a resource block set indicated by the resource block set index, and the first time domain symbol and the second time domain symbol are different symbols within the same slot.

In an embodiment, the interlaced resource block index includes a first interlaced resource block index and a second interlaced resource block index, the interlaced resource block indicated by the interlaced resource block index is on the first time domain symbol or the second time domain symbol, and receiving, by the receiving module 102, the sidelink synchronization broadcast information block on the physical resource blocks of the interlaced resource block indicated by the interlaced resource block index includes the following.

Each logical resource block of the sidelink synchronization broadcast information block is received on first physical resource blocks of an interlaced resource block indicated by the first interlaced resource block index and second physical resource blocks of an interlaced resource block indicated by the second interlaced resource block index.

In an embodiment, the interlaced resource block index includes a first interlaced resource block index and a second interlaced resource block index, the interlaced resource block indicated by the interlaced resource block index is on the first time domain symbol or the second time domain symbol, and receiving, by the receiving module 102, the sidelink synchronization broadcast information block on the physical resource blocks of the interlaced resource block indicated by the interlaced resource block index includes: receiving a first part of the sidelink synchronization broadcast information block on physical resource blocks of a first interlaced resource block indicated by the first interlaced resource block index; and receiving a second part of the sidelink synchronization broadcast information block on physical resource blocks of a second interlaced resource block indicated by the second interlaced resource block index.

An overlap exists between the first part and the second part.

In an embodiment, receiving, by the receiving module 102, the second part of the sidelink synchronization broadcast information block on the physical resource blocks of the second interlaced resource block indicated by the second interlaced resource block index includes: receiving logical resource blocks mapped from the n-th logical resource block to the last logical resource block among m logical resource blocks of the sidelink synchronization broadcast information block on the physical resource blocks of the second interlaced resource block indicated by the second interlaced resource block index.

In an embodiment, the value of $(m - n + 1)$ equals the number of physical resource blocks on the second interlaced resource block.

In an embodiment, one interlaced resource block index is provided, the interlaced resource block indicated by the interlaced resource block index is on the first time domain symbol or the second time domain symbol, and receiving, by the receiving module 102, the sidelink synchronization broadcast information block on the physical resource blocks of the interlaced resource block indicated by the interlaced resource block index includes: receiving the sidelink synchronization broadcast information block on physical resource blocks of an interlaced resource block indicated by the interlaced resource block index.

In an embodiment, the receiving module 102 is specifically configured to select frequency domain resource elements for mapping the sidelink synchronization broadcast information block from frequency domain resource elements indicated by the frequency domain resource position according to a frequency domain pattern; receive symbols corresponding to a physical sidelink broadcast channel on selected frequency domain resource elements on a second time domain symbol in a slot corresponding to a slot index; and receive symbols corresponding to a sidelink synchronization signal on a selected part of frequency domain resource elements on a first time domain symbol in the slot corresponding to the slot index.

The first time domain symbol and the second time domain symbol are different time domain symbols within the slot.

The slot index is included in the time domain resource position.

In an embodiment, the frequency domain resource elements indicated by the frequency domain resource position are divided into different resource element groups; and the frequency domain pattern includes a frequency domain pattern between the resource element groups and a frequency domain pattern within each resource element group.

In an embodiment, the receiving module 102 is specifically configured to perform the following.

If the number of physical resource blocks of an interlaced resource block indicated by an interlaced resource block index indicated by an interlaced resource module index on a time domain symbol in a slot corresponding to a slot index is greater than or equal to the number of logical resource blocks of the sidelink synchronization broadcast information block, the sidelink synchronization broadcast information block is received on the physical resource blocks of the interlaced resource block.

Otherwise, the sidelink synchronization broadcast information block is received on interlaced resource blocks indicated by two interlaced resource block indices.

The slot index is included in the time domain resource position.

In an embodiment, at least one of the slot index or the symbol index is determined by one or more of the following: signaling configuration; predefinition; and preconfiguration.

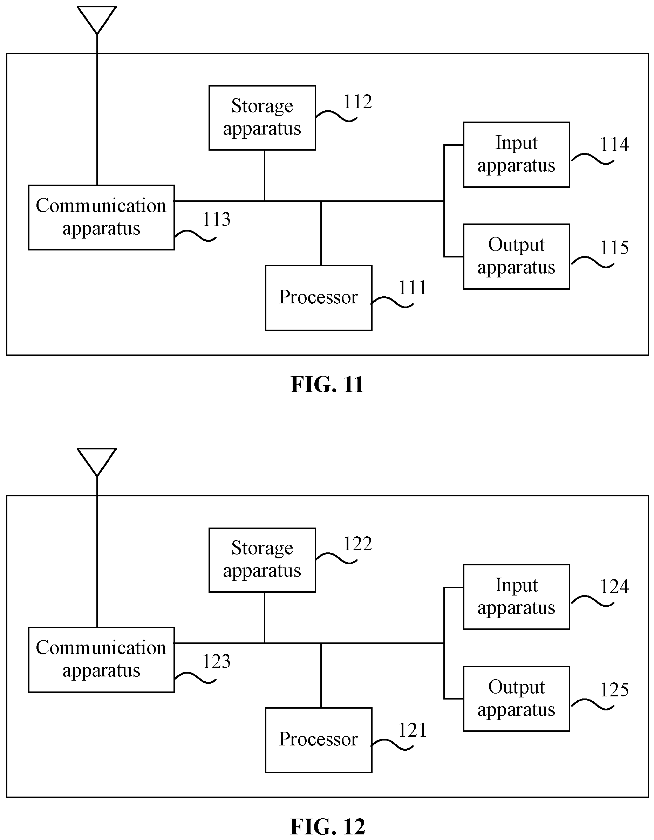

In an example embodiment, the embodiment of the present disclosure provides a first communication node. FIG. 11 is a diagram illustrating the structure of a first communication node according to an embodiment of the present disclosure. As shown in FIG. 11, the first communication node provided in the present disclosure includes one or more processors 111 and a storage apparatus 112. One or more processors 111 may be provided in the first communication node. In FIG. 11, one processor 111 is used as an example. The storage apparatus 112 is configured to store one or more programs. The one or more programs, when executed by the one or more processors 111, cause the one or more processors 111 to implement the resource determination method as described in the embodiment of FIG. 5 of the present disclosure.

The first communication node also includes a communication apparatus 113, an input apparatus 114, and an output apparatus 115.

The processor 111, the storage apparatus 112, the communication apparatus 113, the input apparatus 114, and the output apparatus 115 in the first communication node may be connected via a bus or other means, with connection via a bus as an example in FIG. 11.

The input apparatus 114 may be configured to receive input digital or character information and to generate key signal input related to user settings and function control of the first communication node. The output apparatus 115 may include a display device such as a display screen.

The communication apparatus 113 may include a receiver and a transmitter. The communication apparatus 113 is configured to perform information transmission and reception communication under the control of the processor 111, such as transmitting and receiving the sidelink synchronization broadcast information block.

As a computer-readable storage medium, the storage apparatus 112 may be configured to store software programs, computer-executable programs, and modules, such as program instructions/modules (for example, the determination module 910 and the mapping module 920 in the resource determination apparatus) corresponding to the resource determination method according to embodiments of the present disclosure. The storage apparatus 112 may include a program storage region and a data storage region. The program storage region may store an operating system and an application program required by at least one function while the data storage region may store data created depending on the use of the first communication node. Additionally, the storage apparatus 112 may include a high-speed random-access memory and may also include a nonvolatile memory, such as at least one disk memory device, a flash memory device, or another nonvolatile solid-state memory. In some examples, the storage apparatus 112 may further include memories that are remotely disposed with respect to the processor 111. These remote memories may be connected to the first communication node via a network. Examples of the preceding network include but are not limited to, the Internet, an intranet, a local area network, a mobile communication network, and a combination thereof.

In an example embodiment, an embodiment of the present disclosure provides a second communication node. FIG. 12 is a diagram illustrating the structure of a communication node according to an embodiment of the present disclosure. As shown in FIG. 12, the second communication node provided in the present disclosure includes one or more processors 121 and a storage apparatus 122. One or more processors 121 may be provided in the second communication node. In FIG. 12, one processor 121 is used as an example. The storage apparatus 122 is configured to store one or more programs. When executed by the one or more processors 121, the one or more programs cause the one or more processors 121 to implement the resource determination method as described in the embodiment of FIG. 6 of the present disclosure.

The second communication node also includes a communication apparatus 123, an input apparatus 124, and an output apparatus 125.

The processor 121, the storage apparatus 122, the communication apparatus 123, the input apparatus 124, and the output apparatus 125 in the second communication node may be connected via a bus or other means, with connection via a bus as an example in FIG. 12.

The input apparatus 124 may be configured to receive input digital or character information and to generate key signal input related to user settings and function control of the second communication node. The output apparatus 125 may include a display device such as a display screen.

The communication apparatus 123 may include a receiver and a transmitter. The communication apparatus 123 is configured to perform information transmission and reception communication under the control of the processor 121, such as transmitting and receiving the sidelink synchronization broadcast information block.

As a computer-readable storage medium, the storage apparatus 122 may be configured to store software programs, computer-executable programs, and modules, such as program instructions/modules (for example, the determination module 101 and the receiving module 102 in the resource determination apparatus) corresponding to the resource determination method according to embodiments of the present disclosure. The storage apparatus 122 may include a program storage region and a data storage region. The program storage region may store an operating system and an application program required by at least one function while the data storage region may store data created depending on the use of the second communication node. Additionally, the storage apparatus 122 may include a high-speed random-access memory and may also include a nonvolatile memory, such as at least one disk memory device, a flash memory device, or another nonvolatile solid-state memory. In some examples, the storage apparatus 122 may further include memories that are remotely disposed with respect to the processor 121. These remote memories may be connected to the second communication node via a network. Examples of the preceding network include but are not limited to, the Internet, an intranet, a local area network, a mobile communication network, and a combination thereof.

In an example embodiment, the embodiment of the present disclosure also provides a storage medium. The storage medium stores a computer program that, when executed by a processor, performs any of the resource determination methods described in the embodiments of the present disclosure, such as the resource determination method applied to the first communication node and the resource determination method applied to the second communication node. The resource determination method applied to the first communication node includes the following:

A time domain resource position and a frequency domain resource position within a sidelink bandwidth part for mapping a synchronization resource are determined, where the frequency domain resource position includes a resource block set index and an interlaced resource block index.

A sidelink synchronization broadcast information block is mapped based on the time domain resource position and the frequency domain resource position.

The resource mapping method applied to the second communication node includes the following:
A time domain resource position and a frequency domain resource position within a sidelink bandwidth part for mapping a synchronization resource are determined, where the frequency domain resource position includes a resource block set index and an interlaced resource block index.

A sidelink synchronization broadcast information block is received based on the time domain resource position and the frequency domain resource position.

The computer storage medium in this embodiment of the present disclosure may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device, or any combination thereof. Examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included on the computer-readable medium may be transmitted on any suitable medium including, but not limited to, a wireless medium, a wire, an optical cable, a radio frequency (RF), or any suitable combination thereof.

Computer program codes for performing the operations of the present disclosure may be written in one or more programming languages or a combination of multiple programming languages. The programming languages include object-oriented programming languages such as Java, Smalltalk, and C++ and may also include conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In a case related to the remote computer, the remote computer may be connected to the user computer via any type of network including a local area network (LAN) or a wide area network (WAN) or may be connected to an external computer (for example, via the Internet by an Internet service provider).

The preceding descriptions are only example embodiments of the present disclosure and are not intended to limit the scope of the present disclosure.

It is to be understood by those skilled in the art that the term terminal device encompasses any appropriate type of radio user equipment, such as a mobile phone, a portable data processing apparatus, a portable web browser, or a vehicle-mounted mobile station.

Generally speaking, various embodiments of the present disclosure may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present disclosure is not limited thereto.

Embodiments of the present disclosure may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present disclosure may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology such as, but not limited to, a read-only memory (ROM), a random-access memory (RAM), or an optical memory device and system (a digital video disc (DVD), or a compact disc (CD)). The computer-readable medium may include a non-transitory storage medium. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present disclosure has been provided above through exemplary and non-restrictive examples. However, considering the drawings and the claims, various modifications and adjustments to the preceding embodiments are apparent to those skilled in the art without deviating from the scope of the present disclosure. Accordingly, the proper scope of the present disclosure is determined according to the claims.

**Claims**

1. A resource determination method, comprising:

   determining a time domain resource position and a frequency domain resource position within a sidelink bandwidth part for mapping a synchronization resource, wherein the frequency domain resource position comprises a resource block set index and an interlaced resource block index; and
   mapping a sidelink synchronization broadcast information block based on the time domain resource position and the frequency domain resource position.

2. The method according to claim 1, wherein at least one resource block set index is provided, and at least one interlaced resource block index is provided.

3. The method according to claim 1, wherein determining the frequency domain resource position within the sidelink bandwidth part for mapping the synchronization resource comprises:

   determining a resource block set index, a first interlaced resource block index, and a second interlaced resource block index, wherein the resource block set index, the first interlaced resource block index, and the second interlaced resource block index are preconfigured or configured through signaling;
   wherein physical resource blocks on a first interlaced resource block indicated by the first interlaced resource block index and physical resource blocks on a second interlaced resource block indicated by the second interlaced resource block index are used to carry the sidelink synchronization broadcast information block, and the first interlaced resource block and the second interlaced resource block are interlaced resource blocks on a resource block set indicated by the resource block set index.

4. The method according to claim 1, wherein determining the frequency domain resource position within the sidelink bandwidth part for mapping the synchronization resource comprises:

   determining a resource block set index and a first interlaced resource block index, wherein the resource block set index and the first interlaced resource block index are preconfigured or configured through signaling; and
   determining a second interlaced resource block index.

5. The method according to claim 1, wherein determining the frequency domain resource position within the sidelink bandwidth part for mapping the synchronization resource comprises:

   determining an absolute radio frequency channel number, wherein the absolute radio frequency channel number is preconfigured or configured through signaling;
   determining a resource block set index and a first interlaced resource block index based on resource elements within the sidelink bandwidth part where the absolute radio frequency channel number is located; and
   determining a second interlaced resource block index.

6. The method according to claim 1, wherein determining the frequency domain resource position within the sidelink bandwidth part for mapping the synchronization resource comprises:

determining a resource block set index, wherein the resource block set index is preconfigured or configured through signaling;
determining an index of an interlaced resource block where a first physical resource block on a resource block set indicated by the resource block set index is located as a first interlaced resource block index; and
determining a second interlaced resource block index.

7. The method according to any one of claims 4 to 6, wherein determining the second interlaced resource block index comprises:

determining the second interlaced resource block index based on the first interlaced resource block index, an offset value, and a number of interlaced resource blocks within a resource block set; or
determining the second interlaced resource block index based on the first interlaced resource block index and a predefined rule.

8. The method according to claim 1, wherein determining the frequency domain resource position within the sidelink bandwidth part for mapping the synchronization resource comprises:

determining a resource block set index and an interlaced resource block index, wherein the resource block set index and the interlaced resource block index are preconfigured or configured through signaling;
wherein physical resource blocks on an interlaced resource block indicated by the interlaced resource block index are used to carry the sidelink synchronization broadcast information block, and the interlaced resource block is an interlaced resource block on a resource block set indicated by the resource block set index.

9. The method according to claim 1, wherein determining the frequency domain resource position within the sidelink bandwidth part for mapping the synchronization resource comprises:

determining an absolute radio frequency channel number, wherein the absolute radio frequency channel number is preconfigured or configured through signaling; and
determining a resource block set index and an interlaced resource block index based on resource elements within the sidelink bandwidth part where the absolute radio frequency channel number is located;
wherein physical resource blocks on an interlaced resource block indicated by the interlaced resource block index are used to carry the sidelink synchronization broadcast information block, and the interlaced resource block is an interlaced resource block on a resource block set indicated by the resource block set index.

10. The method according to claim 1, wherein determining the frequency domain resource position within the sidelink bandwidth part for mapping the synchronization resource comprises:

determining a resource block set index, wherein the resource block set index is preconfigured or configured through signaling; and
determining an index of an interlaced resource block where a first physical resource block on a resource block set indicated by the resource block set index is located as an interlaced resource block index;
wherein physical resource blocks on an interlaced resource block indicated by the interlaced resource block index are used to carry the sidelink synchronization broadcast information block, and the interlaced resource block is an interlaced resource block on a resource block set indicated by the resource block set index.

11. The method according to claim 1, wherein mapping the sidelink synchronization broadcast information block based on the time domain resource position and the frequency domain resource position comprises:

mapping first information of the sidelink synchronization broadcast information block on physical resource blocks of an interlaced resource block indicated by the interlaced resource block index on a first time domain symbol in a slot corresponding to a slot index; and
mapping second information of the sidelink synchronization broadcast information block on physical resource blocks of an interlaced resource block indicated by the interlaced resource block index on a second time domain symbol in the slot corresponding to the slot index;
wherein the interlaced resource block is an interlaced resource block on a resource block set indicated by the resource block set index, and the first time domain symbol and the second time domain symbol are different symbols within the same slot, and
the slot index is comprised in the time domain resource position.

12. The method according to claim 11, wherein the interlaced resource block index comprises a first interlaced resource block index and a second interlaced resource block index, the interlaced resource block indicated by the interlaced resource block index is on the first time domain symbol or the second time domain symbol, and mapping the sidelink synchronization broadcast information block on the physical resource blocks of the interlaced resource block indicated by the interlaced resource block index comprises:

sequentially mapping a plurality of logical resource blocks of the sidelink synchronization broadcast information block on first physical resource blocks of an interlaced resource block indicated by the first interlaced resource block index and second physical resource blocks of an interlaced resource block indicated by the second interlaced resource block index; and
after mapping the plurality of logical resource blocks of the sidelink synchronization broadcast information block, continuing to map logical resource blocks of the sidelink synchronization broadcast information block until both the first physical resource blocks and the second physical resource blocks are fully mapped.

13. The method according to claim 11, wherein the interlaced resource block index comprises a first interlaced resource block index and a second interlaced resource block index, the interlaced resource block indicated by the interlaced resource block index is on the first time domain symbol or the second time domain symbol, and mapping the sidelink synchronization broadcast information block on the physical resource blocks of the interlaced resource block indicated by the interlaced resource block index comprises:

mapping a first part of the sidelink synchronization broadcast information block on physical resource blocks of a first interlaced resource block indicated by the first interlaced resource block index; and
mapping a second part of the sidelink synchronization broadcast information block on physical resource blocks of a second interlaced resource block indicated by the second interlaced resource block index;
wherein an overlap exists between the first part and the second part.

14. The method according to claim 13, wherein mapping the first part of the sidelink synchronization broadcast information block on the physical resource blocks of the first interlaced resource block indicated by the first interlaced resource block index comprises:
mapping m logical resource blocks of the sidelink synchronization broadcast information block, starting from a first logical resource block of the m logical resource blocks, onto the physical resource blocks of the first interlaced resource block indicated by the first interlaced resource block index until the physical resource blocks of the first interlaced resource block are all mapped.

15. The method according to claim 13, wherein mapping the second part of the sidelink synchronization broadcast information block on the physical resource blocks of the second interlaced resource block indicated by the second interlaced resource block index comprises:
mapping $m$ logical resource blocks of the sidelink synchronization broadcast information block, starting from an n-th logical resource block of the $m$ logical resource blocks to a last logical resource block of the m logical resource blocks, onto the physical resource blocks of the second interlaced resource block indicated by the second interlaced resource block index.

16. The method according to claim 15, wherein
a value of $(m - n + 1)$ equals the number of physical resource blocks on the second interlaced resource block.

17. The method according to claim 13, wherein mapping the second part of the sidelink synchronization broadcast information block on the physical resource blocks of the second interlaced resource block indicated by the second interlaced resource block index comprises:

mapping at least logical resource blocks of the sidelink synchronization broadcast information block that are not mapped on the first interlaced resource block onto the physical resource blocks of the second interlaced resource block indicated by the second interlaced resource block index; and
mapping logical resource blocks of the sidelink synchronization broadcast information block onto unmapped physical resource blocks of the second interlaced resource block indicated by the second interlaced resource block index, wherein the logical resource blocks mapped onto the unmapped physical resource blocks are logical resource blocks of the sidelink synchronization broadcast information block that have already been mapped on the first interlaced resource block.

18. The method according to claim 11, wherein one interlaced resource block index is provided, the interlaced resource block indicated by the interlaced resource block index is on the first time domain symbol or the second time domain symbol, and mapping the sidelink synchronization broadcast information block on the physical resource blocks of the interlaced resource block indicated by the interlaced resource block index comprises:
mapping the sidelink synchronization broadcast information block on physical resource blocks of an interlaced resource block indicated by the interlaced resource block index.

19. The method according to claim 11, wherein the second information comprises symbols corresponding to a physical sidelink broadcast channel, and mapping the second information of the sidelink synchronization broadcast information block on the physical resource blocks of the interlaced resource block indicated by the interlaced resource block index on the second time domain symbol in the slot corresponding to the slot index comprises:
performing rate matching on symbols related to the physical sidelink broadcast channel on the physical resource blocks of the interlaced resource block indicated by the interlaced resource block index on the second time domain symbol in the slot corresponding to the slot index, and mapping the symbols related to the physical sidelink broadcast channel onto all physical resource blocks indicated by the interlaced resource block index on the second time domain symbol, wherein the symbols corresponding to the physical sidelink broadcast channel are symbols obtained after rate matching the symbols related to the physical sidelink broadcast channel.

20. The method according to claim 1, wherein mapping the sidelink synchronization broadcast information block based on the time domain resource position and the frequency domain resource position comprises:

selecting frequency domain resource elements for mapping the sidelink synchronization broadcast information block from frequency domain resource elements indicated by the frequency domain resource position according to a frequency domain pattern;
mapping symbols corresponding to a sidelink synchronization signal on a selected part of frequency domain resource elements on a first time domain symbol in a slot corresponding to a slot index; and
mapping symbols corresponding to a physical sidelink broadcast channel on selected frequency domain resource elements on a second time domain symbol in the slot corresponding to the slot index;
wherein the first time domain symbol and the second time domain symbol are different time domain symbols within the slot, and
the slot index is comprised in the time domain resource position.

21. The method according to claim 20, wherein

the frequency domain resource elements indicated by the frequency domain resource position are divided into different resource element groups; and
the frequency domain pattern comprises a frequency domain pattern between the resource element groups and a frequency domain pattern within each resource element group of the resource element groups.

22. The method according to claim 1, wherein mapping the sidelink synchronization broadcast information block based on the time domain resource position and the frequency domain resource position comprises:

in response to a number of physical resource blocks of an interlaced resource block indicated by an interlaced resource block index indicated by an interlaced resource module index on a time domain symbol in a slot corresponding to a slot index being greater than or equal to a number of logical resource blocks of the sidelink synchronization broadcast information block, mapping the sidelink synchronization broadcast information block on the physical resource blocks of the interlaced resource block; and
in response to the number of physical resource blocks of the interlaced resource block indicated by the interlaced resource block index indicated by the interlaced resource module index on the time domain symbol in the slot corresponding to the slot index being less than the number of logical resource blocks of the sidelink synchronization broadcast information block, mapping the sidelink synchronization broadcast information block using interlaced resource blocks indicated by two interlaced resource block indices;
wherein the slot index is comprised in the time domain resource position.

23. The method according to claim 1, wherein the time domain resource position comprises at least one of a slot index or a symbol index within a slot.

24. The method according to claim 23, wherein at least one of the slot index or the symbol index is determined by one or more of the following:

    signaling configuration;
    predefinition; and
    preconfiguration.

25. A resource determination method, comprising:

    determining a time domain resource position and a frequency domain resource position within a sidelink bandwidth part for mapping a synchronization resource, wherein the frequency domain resource position comprises a resource block set index and an interlaced resource block index; and
    receiving a sidelink synchronization broadcast information block based on the time domain resource position and the frequency domain resource position.

26. A first communication node, comprising:

    at least one processor; and
    a storage apparatus configured to store at least one program;
    wherein the at least one program, when executed by the at least one processor, causes the at least one processor to perform the method according to any one of claims 1 to 24.

27. A second communication node, comprising:

    at least one processor; and
    a storage apparatus configured to store at least one program;
    wherein the at least one program, when executed by the at least one processor, causes the at least one processor to perform the method according to claim 25.

28. A storage medium storing a computer program, wherein when the computer program is executed by a processor, the method according to any one of claims 1 to 25 is performed.

| P S B C H | P S S | P S S | S S S | S S S | P S B C H | P S B C H | P S B C H | P S B C H | P S B C H | P S B C H | P S B C H | P S B C H | G A P |
|---|---|---|---|---|---|---|---|---|---|---|---|---|---|

**FIG. 1**

| P S B C H | P S S | P S S | S S S | S S S | P S B C H | P S B C H | P S B C H | P S B C H | P S B C H | P S B C H | G A P |
|---|---|---|---|---|---|---|---|---|---|---|---|

**FIG. 2**

```
          ┌─────┐
          │ 131 │
          └─────┘
            ⋮
┌────────────────────────────┐      ┌─────┐
│ RRC signaling              │      │ 66  │
│ sl-A bso luteFrequencySSB  │ ───▶ ├─────┤
└────────────────────────────┘      │ 65  │
                                    └─────┘
                                      ⋮
                                    ┌─────┐
                                    │  0  │
                                    └─────┘
```

**FIG. 3**

| First communication node | ⚡ | Second communication node |
|---|---|---|

**FIG. 4**

Determine a time domain resource position and a frequency domain resource position within a sidelink bandwidth part for mapping a synchronization resource, where the frequency domain resource position includes a resource block set index and an interlaced resource block index — S110

Map a sidelink synchronization broadcast information block based on the time domain resource position and the frequency domain resource position — S120

**FIG. 5**

Determine a time domain resource position and a frequency domain resource position within a sidelink bandwidth part for mapping a synchronization resource, where the frequency domain resource position includes a resource block set index and an interlaced resource block index — S210

Receive a sidelink synchronization broadcast information block based on the time domain resource position and the frequency domain resource position — S220

**FIG. 6**

S-SSB

| RB0 | RB1 | RB2 | RB3 | RB4 | RB5 | RB6 | RB7 | RB8 | RB9 | RB10 |
|-----|-----|-----|-----|-----|-----|-----|-----|-----|-----|------|

**FIG. 7**

SL BWP

RB set0

RB set1

[] IRB0     [] IRB1

**FIG. 8**

910          920

| Determination module | Mapping module |

**FIG. 9**

101          102

| Determination module | Receiving module |

**FIG. 10**

Storage
apparatus    112

Input
apparatus    114

Communication
apparatus    113

Output
apparatus    115

Processor    111

**FIG. 11**

Storage
apparatus    122

Input
apparatus    124

Communication
apparatus    123

Output
apparatus    125

Processor    121

**FIG. 12**

## INTERNATIONAL SEARCH REPORT

| | International application No. |
|---|---|
| | **PCT/CN2023/142838** |

### A. CLASSIFICATION OF SUBJECT MATTER

H04W72/30(2023.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 边链, 旁链, 侧链, 直连, 资源块, 索引, 映射, 同步, 集, sidelink, SL, SL-SS, RB, set, burst, interlace, index, map, resource, SSB, synchronization

### C. DOCUMENTS CONSIDERED TO BE RELEVANT

| Category* | Citation of document, with indication, where appropriate, of the relevant passages | Relevant to claim No. |
|---|---|---|
| PX | CN 116017733 A (ZTE CORP.) 25 April 2023 (2023-04-25)<br>claims 1-28 | 1-28 |
| Y | CN 114271000 A (HYUNDAI MOTOR COMPANY et al.) 01 April 2022 (2022-04-01)<br>description, paragraphs [0009]-[0133] | 1-10, 20, 21, 23-28 |
| Y | CN 115225217 A (VIVO MOBILE COMMUNICATION CO., LTD.) 21 October 2022<br>(2022-10-21)<br>description, paragraphs [0044]-[0179] | 1-10, 20, 21, 23-28 |
| A | WO 2021102859 A1 (HUAWEI TECHNOLOGIES CO., LTD.) 03 June 2021 (2021-06-03)<br>entire document | 1-28 |
| A | US 2022061099 A1 (QUALCOMM INC.) 24 February 2022 (2022-02-24)<br>entire document | 1-28 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 March 2024** | **28 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/142838**

| Patent document cited in search report | | | Publication date (day/month/year) | Patent family member(s) | | | Publication date (day/month/year) |
|---|---|---|---|---|---|---|---|
| CN | 116017733 | A | 25 April 2023 | None | | | |
| CN | 114271000 | A | 01 April 2022 | US | 2022279496 | A1 | 01 September 2022 |
| | | | | EP | 4021125 | A1 | 29 June 2022 |
| | | | | EP | 4021125 | A4 | 30 August 2023 |
| | | | | WO | 2021034044 | A1 | 25 February 2021 |
| CN | 115225217 | A | 21 October 2022 | None | | | |
| WO | 2021102859 | A1 | 03 June 2021 | None | | | |
| US | 2022061099 | A1 | 24 February 2022 | KR | 20230051499 | A | 18 April 2023 |
| | | | | WO | 2022040462 | A1 | 24 February 2022 |
| | | | | EP | 4201145 | A1 | 28 June 2023 |
| | | | | BR | 112023002286 | A2 | 14 March 2023 |

Form PCT/ISA/210 (patent family annex) (July 2022)